# EUROPEAN PATENT SPECIFICATION

(11) **EP 3 955 638 B1**
(45) Date of publication and mention of the grant of the patent: **29.10.2025**
(21) Application number: 20805078.1
(22) Date of filing: 08.05.2020
(51) Int. Cl.: H04L 5/00, H04L 41/0654, H04L 43/0882, H04W 76/19, H04B 7/0404, H04B 7/06, H04B 7/08

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(30) Priority: 10.05.2019 CN 201910390543
(43) Date of publication of application: 16.02.2022
(73) Proprietor: Huawei Technologies Co., Ltd., Longgang Shenzhen, Guangdong 518129 (CN)
(72) Inventor: ZHANG, Di, Shenzhen, Guangdong 518129 (CN); LIU, Kunpeng, Shenzhen, Guangdong 518129 (CN)
(74) Representative: Thun, Clemens
(86) International application number: PCT/CN2020/089086
(87) International publication number: WO 2020/228589

(56) References cited:
- WO-A1-2021/034672
- WO-A2-2019/051242
- CN-A- 108 633 062
- US-A1- 2018 234 960
- LG ELECTRONICS: "Discussion on multi-beam based operations and enhancements", vol. RAN WG1, no. Reno, USA; 20190513 - 20190517, 4 May 2019 (2019-05-04), XP051708767, Retrieved from the Internet <URL:http://www.3gpp.org/ftp/tsg%5Fran/WG1%5FRL1/TSGR1%5F97/Docs/R1%2D1906731%2Ezip> [retrieved on 20190504]
- VIVO: "Discussion on beam failure recovery", vol. RAN WG1, no. Prague, CZ; 20171009 - 20171013, 8 October 2017 (2017-10-08), XP051340661, Retrieved from the Internet <URL:http://www.3gpp.org/ftp/Meetings_3GPP_SYNC/RAN1/Docs/> [retrieved on 20171008]
- HUAWEI ET AL: "Enhancements on multi-beam operation", vol. RAN WG1, no. Reno, USA; 20190513 - 20190517, 3 May 2019 (2019-05-03), XP051708072, Retrieved from the Internet <URL:http://www.3gpp.org/ftp/tsg%5Fran/WG1%5FRL1/TSGR1%5F97/Docs/R1%2D1906030%2Ezip> [retrieved on 20190503]
- ZTE: "Enhancements on multi-beam operation", 3GPP DRAFT; R1-1901635, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 February 2019 (2019-02-16), pages 1 - 18, XP051599332
- SPREADTRUM COMMUNICATIONS: "Discussion on multi-beam operation", vol. RAN WG1, no. Xi'an, China; 20190408 - 20190412, 29 March 2019 (2019-03-29), XP051691765, Retrieved from the Internet <URL:http://www.3gpp.org/ftp/tsg%5Fran/WG1%5FRL1/TSGR1%5F96b/Docs/R1%2D1904781%2Ezip> [retrieved on 20190329]
- HUAWEI ET AL: "Enhancements on multi-beam operation", vol. RAN WG1, no. Prague, Czech Republic; 20190826 - 20190830, 17 August 2019 (2019-08-17), XP051764690, Retrieved from the Internet <URL:http://www.3gpp.org/ftp/tsg_ran/WG1_RL1/TSGR1_98/Docs/R1-1908067.zip> [retrieved on 20190817]
- LG ELECTRONICS: "3GPP TSG RAN WG1 Meeting #97 R1-1906731", DISCUSSION ON MULTI-BEAM BASED OPERATIONS AND ENHANCEMENTS, 4 May 2019 (2019-05-04), XP051708767, DOI: 20200708113737X

## Description

### TECHNICAL FIELD

This application relates to the communications field, and more specifically, to a communication method and a communications apparatus in a link failure scenario in the communications field.

### BACKGROUND

In a process of communication between a terminal device and a network device, the terminal device needs to detect an available beam, and transmit information about the available beam to the network device, to establish a link connection. When detecting a link fault (beam failure), the terminal device may send a link failure recovery request message (beam failure recovery request, BFRQ) to the network device, to notify the network device of the link failure, and report information about a detected new available beam to the network device. The network device sends a link failure recovery response message (beam failure recovery response, BFRR) to the terminal device, to indicate new link information to the terminal device, so that the terminal device can establish a new link connection to the network device, thereby recovering a link. In a new radio (new radio, NR) communications system, the terminal device may send the BFRQ to the network device by using an uplink resource.

After the terminal device determines that a link in a cell fails, an original uplink may also fail. After link failure recovery, an antenna panel of a terminal device corresponding to a new link may change. As a result, an uplink signal cannot be sent on the new link by using the original antenna panel, and communication efficiency is reduced.

The document LG ELECTRONICS: "Discussion on multi-beam based operations and enhancements", R1-1906731, XP 051708767 is an early standardization document regarding multi-beam transmissions in communication networks.

The document US 2018/234960 A1 shows a communications system and method, with configuration of uplink resources for beam recovery.

### SUMMARY

The present invention is defined by the independent claims.

A first aspect of the invention comprises a method as set forth in claim 1.

A second aspect of the invention comprises a method as set forth in claim 5.

A third aspect of the invention comprises a terminal device as set forth in claim 9.

A fourth aspect of the invention comprises a network device as set forth in claim 10.

A fifth aspect of the invention comprises a computer program as set forth in claim 11.

A sixth aspect of the invention comprises a computer program as set forth in claim 12.

Further advantageous developments are shown by the dependent claims.

This application provides a communication method and a communications apparatus in a link failure scenario. In the method, antenna panel information is reported, so that transmission of an uplink signal can be recovered in time, thereby improving link reliability.

According to a first aspect of the disclosure, a communication method is provided, which does not fall under the scope of the claims.

The communication method includes:
determining first antenna panel information; sending a link failure recovery request message, where the link failure recovery request message indicates the first antenna panel information; and sending an uplink signal based on the first antenna panel information.

According to the foregoing technical solution, when a link between a terminal device and a network device fails, and the terminal device requests the network device to recover the link, information about an antenna panel for sending an uplink signal is indicated by using a link failure recovery request message. For example, the terminal device may indicate, in an explicit or implicit manner, information (a panel ID) about an antenna panel corresponding to a new link for sending the uplink signal.

Specifically, the implicit manner may be as follows: The terminal device implicitly reports the first antenna panel information to the network device by using an association relationship that is between first reference signal resource information and a first antenna panel and that is included in the link failure recovery request message, or an association relationship between a first resource for carrying the link failure recovery request message and a first antenna panel. In this way, the network device may learn of the antenna panel corresponding to the new link, to recover transmission of the uplink signal in time.

Alternatively, in the explicit manner, the terminal device directly includes the first antenna panel information (for example, an identifier of a first antenna panel) in the link failure recovery request message and sends the link failure recovery request message to the network device. The terminal device may send the uplink signal based on the antenna panel information, or the network device may obtain the antenna panel information, to recover transmission of the uplink signal in time, thereby improving link recovery reliability. The first antenna panel information belongs to an antenna panel information set.

It should be understood that, according to the method for reporting the antenna panel information by the terminal device to the network device that is described in this application, the network device may be notified that the terminal device may send the uplink signal based on the antenna panel information, and correspondingly, the network device may also receive the uplink signal based on the antenna panel information. The method may also be extended to receiving and sending of a downlink signal. This is not limited in this application.

With reference to the first aspect, in some possible implementations, the link failure recovery request message indicates cell identifiers of M cells in which a link failure occurs and/or information about N first reference signal resources used to recover links of the M cells, M≥1, N≥1, and M and N are integers.

It should be understood that, in embodiments of this application, the M cells of the terminal device are some or all of cells in which a link failure occurs. Any one of the M cells may correspond to one or more of the N first reference signal resources, or may not correspond to any first reference signal resource.

It should be understood that, in the embodiments of this application, a first resource set may include at least one first resource, the first resource is used to send the link failure recovery request message, and the antenna panel information set includes at least one piece of first antenna panel information.

It should be understood that, in this application, a link failure recovery request may be understood as a beam failure recovery request, and is referred to as a "link failure recovery request message" or a BFRQ in the descriptions of the embodiments of this application.

In a possible implementation, when the link failure recovery request message (BFRQ) is in a form of one message and reported by the terminal device to the network device, the link failure recovery request message may indicate the cell identifiers of the M cells in which the link failure occurs and/or the information about the N first reference signal resources used to recover the links of the M cells.

In a possible implementation, when the link failure request message (BFRQ) is in a form of one message and reported by the terminal device to the network device, the link failure request message may indicate a link failure of the M cells and/or the information about the N first reference signal resources used to recover the links of the M cells. It should be understood that, in this case, cell identification information may be implicitly indicated by using a cell in which the resource for carrying the link failure request message is located. Details are not described herein.

With reference to the first aspect and the foregoing implementation, in some possible implementations, the link failure recovery request message includes a first link failure recovery request message and a second link failure recovery request message; the first link failure recovery request message is used to indicate that a link failure occurs in at least one cell; and the second link failure recovery request message is used to indicate the cell identifiers of the M cells in which the link failure occurs and/or the information about the N first reference signal resources used to recover the links of the M cells, M≥1, N≥1, and M and N are integers.

In a possible implementation, when the link failure recovery request message (BFRQ) is in a form of two messages and reported by the terminal device to the network device, that is, the link failure recovery request message (BFRQ) includes the first link failure recovery request message (BFRQ 1) and the second link failure recovery request message (BFRQ 2), the first link failure recovery request message may be used to indicate that a link failure occurs in at least one cell; and the second link failure recovery request message is used to indicate the cell identifiers of the M cells in which the link failure occurs and/or the information about the N first reference signal resources used to recover the links of the M cells.

It should be understood that, in this implementation, the second link failure recovery request message (BFRQ 2) may include the cell identifiers of the M cells in which the link failure occurs and/or the information about the N first reference signal resources used to recover the links of the M cells. In this case, the second link failure recovery request message (BFRQ 2) may be carried on a PUSCH.

With reference to the first aspect and the foregoing implementations, in some possible implementations, the link failure recovery request message includes a first link failure recovery request message and a second link failure recovery request message; the first link failure recovery request message indicates the cell identifiers of the M cells in which the link failure occurs; and the second link failure recovery request message indicates the information about the N first reference signal resources used to recover the links of the M cells, M≥1, N≥1, and M and N are integers.

In a possible implementation, when the link failure recovery request message (BFRQ) is in a form of two messages and reported by the terminal device to the network device, that is, the link failure recovery request message includes the first link failure recovery request message and the second link failure recovery request message, the first link failure recovery request message indicates the cell identifiers of the M cells in which the link failure occurs; and the second link failure recovery request message indicates the information about the N first reference signal resources used to recover the links of the M cells.

With reference to the first aspect and the foregoing implementations, in some possible implementations, the method further includes: receiving configuration information, where the configuration information is used to configure a first mapping relationship, where the first mapping relationship is used to indicate a correspondence between a first resource set and an antenna panel information set, the first resource set includes at least one first resource, the first resource is used to send the link failure recovery request message or the first link failure recovery request message, the antenna panel information set includes at least one piece of first antenna panel information, and one piece of first antenna panel information may indicate one first antenna panel; and/or the first mapping relationship is used to indicate a correspondence between a first reference signal resource set and an antenna panel information set, the first reference signal resource set includes at least one first reference signal resource, the antenna panel information set includes at least one piece of first antenna panel information, and one piece of first antenna panel information may indicate one first antenna panel.

It should be understood that, in this application, the first resource set may also be referred to as a "first resource information set", the first resource information set includes at least one piece of first resource information, and one piece of first resource information indicates one first resource. Similarly, the first reference signal resource set may also be referred to as a "first reference signal resource information set", the first reference signal resource information set includes at least one piece of first reference signal resource information, and one piece of first reference signal resource information indicates one first reference signal resource.

It should be further understood that, in the descriptions of the embodiments of this application, meanings of a mapping relationship, a correspondence, and an association relationship are the same or similar.

Specifically, the network device may configure the first mapping relationship for the terminal device by sending the configuration information.

In this application, the first resource set may include at least one first resource, the first resource is used to send the link failure recovery request message (BFRQ), and the antenna panel information set includes at least one piece of first antenna panel information.

It should be understood that, the antenna panel information set includes at least one piece of antenna panel information. The terminal device may have a plurality of antenna panels. For example, the terminal device has four antenna panels. The first antenna panel information may indicate one or more of the antenna panels. This is not limited in this application.

It should be further understood that, the antenna panel information may be a virtual identifier of the antenna panel, an identifier that implicitly indicates a reference signal resource of the antenna panel, an antenna port group identifier (UE antenna port group ID), an antenna group identifier (UE antenna group ID), a beam group identifier, a reference signal resource group identifier, or an antenna panel identifier. This is not limited in this application. It should be understood that, the antenna panel information in the present invention may be replaced with virtual identification information of the antenna panel, identification information that implicitly indicates a reference signal resource of the antenna panel, antenna port group identification information, antenna group identification information, beam group identification information, reference signal resource group identification information, or antenna panel identification information. The antenna panel information may also be referred to as another term. This is not limited in this application. The antenna panel (panel) may also be referred to as an antenna set, a radio transceiver unit (transceiver unit, TXRU) (or referred to as a radio transceiver set), an antenna unit, an antenna group, a horizontal antenna set, a vertical antenna set, an antenna element, an antenna port set, or the like. The embodiments of this application are not limited thereto.

It should be understood that, one piece of antenna panel information may correspond to one power control parameter and/or one timing advance (Timing advance, TA) parameter. It should be understood that, the antenna panel information in the present invention may be transmit antenna panel information, or may be receive antenna panel information. Optionally, the terminal device and the network device may determine one or more antenna panels, antenna port groups, or antenna groups based on one piece of antenna panel information.

It should be further understood that, the correspondence between the first resource set and the antenna panel information set herein may be understood as a correspondence between the first resource set and an antenna panel set, a correspondence between the first resource information set and an antenna panel set. A specific expression form is not limited in the present invention.

It should be further understood that, the correspondence between the first resource information set and the antenna panel information set may be specifically that one first resource corresponds to one piece of antenna panel information, that is, one resource is associated with one piece of antenna panel information; or one first resource corresponds to a plurality of pieces of antenna panel information, that is, one resource is associated with a plurality of pieces of antenna panel information. This is not limited in this application.

It should be understood that, when one resource corresponds to one piece of antenna panel information, antenna panel information associated with some resources may be the same. For example, the resource set includes a resource #a1, a resource #a2, and a resource #a3, and the antenna panel information set includes antenna panel information #c1 and antenna panel information #c2. The network device may configure the resource #a1 to be associated with the antenna panel information #c1, the resource #a2 to be associated with the antenna panel information #c1, and the resource #a3 to be associated with the antenna panel information #c2. After determining the antenna panel information #c1, the terminal device selects the resource #a2 to send the link failure recovery request message or the first link failure recovery request message.

Optionally, the network device may further configure different resource sets to be associated with different antenna panel information.

Optionally, the resource set may be a resource set including a PUCCH resource, or may be a resource set including a PRACH resource.

In another possible implementation, the first mapping relationship is used to indicate a correspondence between a first reference signal resource set and an antenna panel information set.

It should be understood that, in this application, the first reference signal resource set may also be referred to as a "first reference signal resource information set", the first reference signal resource information set includes at least one piece of first reference signal resource information, and one piece of first reference signal resource information indicates one first reference signal resource.

In this application, the first reference signal resource set includes at least one first reference signal resource, or the first reference signal resource information set includes at least one piece of first reference signal resource information, and the antenna panel information set includes at least one piece of first antenna panel information. It should be further understood that, in this application, "a first reference signal" is a corresponding reference signal in the first reference signal resource set, the first reference signal resource set may be a candidate reference signal set, and the first reference signal resource set is a set of reference signal resources used to recover the links of the M (where M≥1, and M is an integer) cells in which the link failure occurs. A corresponding reference signal in the first reference signal resource set may be a reference signal of the M cells, or may be a reference signal of another cell. In other words, a corresponding reference signal resource in the first reference signal resource set may be a reference signal resource of the M cells, or may be a reference signal resource of another cell. This is not limited in this application.

The correspondence between the first reference signal resource information set and the antenna panel information set herein may be understood as a correspondence between the first reference signal resource set and an antenna panel set, a correspondence between the first reference signal resource information set and an antenna panel set, or a correspondence between the first reference signal resource set and the antenna panel information set. A specific expression form is not limited in the present invention. It should be further understood that, the correspondence between the first reference signal resource set and the antenna panel information set herein may be understood as that one first reference signal resource corresponds to one piece of antenna panel information, that is, one first reference signal resource is associated with one piece of antenna panel information; or one first reference signal resource corresponds to a plurality of pieces of antenna panel information, that is, one first reference signal resource is associated with a plurality of pieces of antenna panel information. This is not limited in this application.

It should be understood that, when one reference signal resource corresponds to one piece of antenna panel information, antenna panel information associated with some reference signal resources may be the same. For example, the reference signal resource set includes a reference signal resource #b1, a reference signal resource #a2, and a reference signal resource #a3, and the antenna panel information set includes antenna panel information #c 1 and antenna panel information #c2. The network device may configure the reference signal resource #a1 to be associated with the antenna panel information #c1, the reference signal resource #a2 to be associated with the antenna panel information #c1, and the reference signal resource #a3 to be associated with the antenna panel information #c2. After determining the antenna panel information #c1, the terminal device selects the reference signal resource #a2 to send the link failure recovery request message or the first link failure recovery request message.

Optionally, the reference signal resource set may be a reference signal resource set including a CSI-RS, or may be a reference signal resource set including an SSB, or may be a reference signal resource set including a CSI-RS or an SSB. The reference signal resource set may alternatively be a reference signal resource set including an SRS. The network device configures the first mapping relationship for the terminal device by using the configuration information, and the network device and the terminal device may determine the first antenna panel information by using the first resource for sending the link failure recovery request message. Alternatively, the network device and the terminal device may determine the first antenna panel information by using the first reference signal resource for sending the link failure recovery request message. It should be understood that, a time at which the network device configures the first mapping relationship for the terminal device in step 301 is not limited in this application.

With reference to the first aspect and the foregoing implementations, in some possible implementations, the method further includes: determining the first resource based on the first mapping relationship and the first antenna panel information; and/or determining the first reference signal resource based on the first mapping relationship and the first antenna panel information.

For example, the terminal device may determine the first resource based on the first mapping relationship and the first antenna panel information, and send the link failure recovery request message by using the first resource. Correspondingly, after receiving the link failure recovery request message sent by the terminal device, the network device determines the first antenna panel information based on the first mapping relationship and the first resource for carrying the link failure recovery request message, so that the network device may learn of antenna panel information after link recovery.

Based on the foregoing manner, the terminal device may implicitly report the first antenna panel information to the network device by using an association relationship between the first resource for carrying the link failure recovery request message and the first antenna panel (optionally, the network device may learn of the antenna panel information corresponding to the new link), to recover transmission of the uplink signal in time.

Alternatively, for example, the terminal device may determine the first reference signal resource based on the first mapping relationship and the first antenna panel information, and report the information about the first reference signal resource to the network device by using the link failure recovery request message. Correspondingly, after receiving the link failure recovery request message sent by the terminal device, the network device determines the first antenna panel information based on the first mapping relationship and the information about the first reference signal resource that is included in the link failure recovery request message, so that the network device may learn of antenna panel information after link recovery.

The first resource may be a PRACH resource, or the first resource may be a PUCCH resource. The first reference signal resource may be a CSI-RS resource, or the first reference signal resource may be an SSB resource. This is not limited in this application.

It should be noted that the first resource may be a resource of a PCell or a resource of an SCell. For a current cell, link failure recovery may be performed in the current cell, or for one cell, link failure recovery is performed in another cell. For example, for the link failure recovery request message, when a link failure occurs in the SCell, the first resource may be the resource of the PCell, that is, the resource of the PCell is used to recover a link of the SCell, and vice versa. This is not limited in this application.

Based on the foregoing manner, the terminal device may implicitly report the first antenna panel information to the network device by using the association relationship between the first reference signal resource set and the antenna panel information set and the information about the first reference signal resource that is indicated in the link failure recovery request message (optionally, the network device may learn of the antenna panel information corresponding to the new link), to recover transmission of the uplink signal in time.

With reference to the first aspect and the foregoing implementations, in some possible implementations, the link failure recovery request message includes the first antenna panel information; or the second link failure recovery request message includes the first antenna panel information.

Specifically, the terminal device reports the first antenna panel information to the network device in an explicit manner.

When the link failure recovery request message (BFRQ) is in a form of one message and reported by the terminal device to the network device, the link failure recovery request message may indicate the cell identifiers of the M cells in which the link failure occurs and/or the information about the N first reference signal resources used to recover the links of the M cells, and the link failure recovery request message includes the first antenna panel information. It should be understood that, in this implementation, the link failure recovery request message may directly include the first antenna panel information, for example, include identification information (a panel ID) of a first antenna panel.

When the link failure recovery request message (BFRQ) is in a form of two messages and reported by the terminal device to the network device, that is, the link failure recovery request message (BFRQ) includes the first link failure recovery request message (BFRQ 1) and the second link failure recovery request message (BFRQ 2), the first link failure recovery request message may be used to indicate that a link failure occurs in at least one cell; and the second link failure recovery request message is used to indicate the cell identifiers of the M cells in which the link failure occurs and/or the information about the N first reference signal resources used to recover the links of the M cells.

Optionally, the second link failure recovery request message includes the first antenna panel information.

Optionally, the first antenna panel information and the information about the first reference signal resource are simultaneously sent.

In this implementation, the second link failure recovery request message (BFRQ 2) may include the cell identifiers of the M cells in which the link failure occurs and/or the information about the N first reference signal resources used to recover the links of the M cells. In this case, the second link failure recovery request message (BFRQ 2) may be carried on a PUSCH.

When the link failure recovery request message (BFRQ) is in a form of two messages and reported by the terminal device to the network device, that is, the link failure recovery request message includes the first link failure recovery request message and the second link failure recovery request message, the first link failure recovery request message indicates the cell identifiers of the M cells in which the link failure occurs; and the second link failure recovery request message indicates the information about the N first reference signal resources used to recover the links of the M cells.

Optionally, the second link failure recovery request message includes the first antenna panel information.

Optionally, the first antenna panel information and the information about the first reference signal resource are simultaneously sent.

It should be understood that, when the link failure recovery request message (BFRQ) is in a form of two messages, the second link failure recovery request message may be MAC-CE information, or may be uplink control information reported at a layer 1 (for example, may be similar to UCI information reported by using CSI). Response information of the first link failure recovery request message may be DCI information. The information about the first reference signal resource may be an index of the first reference signal resource, and/or channel quality information (such as RSRP, a SINR, RSRQ, or a CQI) of the first reference signal resource. This is not limited in this application.

With reference to the first aspect and the foregoing implementations, in some possible implementations, the sending an uplink signal based on the first antenna panel information includes: after K time units after the link failure recovery response message is received, sending the uplink signal based on the first antenna panel information, where K≥0, and K is an integer.

It should be understood that, a moment at which the terminal device sends the uplink signal herein may be a time unit after K time units after the terminal device receives the link recovery response message; or may be a K^{th} time unit in which the terminal device receives the link recovery response message, where for example, the terminal device receives the link failure recovery response message and sends the uplink signal on different symbols in a same time unit; or may be a time unit the same as that in which the terminal device receives the link recovery response message. This is not limited in this application.

For example, K may be a preset value. When the terminal device receives the link failure recovery response message in a time unit # 1 and K=4, the terminal device may start to send the uplink signal in a slot represented by a time unit # 5. Alternatively, the terminal device may start to send the uplink signal in a slot (for example, a time unit #6) after the time unit # 5. Alternatively, K=0, and the terminal device may start to send the uplink signal in a slot represented by the time unit #1, for example, a symbol or a time-frequency resource that is in the slot and that is different from that on which the link failure recovery response message is received.

It should be understood that, "starting to send the uplink signal" may be understood as that the uplink signal may be sent based on the first antenna panel information in the time unit and a time period starting from the time unit.

With reference to the first aspect and the foregoing implementations, in some possible implementations, the sending an uplink signal based on the first antenna panel information includes: determining a power control parameter based on the first antenna panel information; and sending the uplink signal based on the power control parameter.

With reference to the first aspect and the foregoing implementations, in some possible implementations, the uplink signal includes at least one of a physical uplink control channel PUCCH, a physical uplink shared channel PUSCH, a sounding reference signal SRS, or a demodulation reference signal DMRS.

According to a second aspect of the disclosure, a communication method is provided, which does not fall under the scope of the claims. The communication method includes: receiving a link failure recovery request message, where the link failure recovery request message indicates first antenna panel information; determining the first antenna panel information; and receiving an uplink signal based on the first antenna panel information.

With reference to the second aspect, in some possible implementations, the link failure recovery request message indicates cell identifiers of M cells in which a link failure occurs and/or information about N first reference signal resources used to recover links of the M cells, M≥1, N≥1, and M and N are integers.

With reference to the second aspect and the foregoing implementation, in some possible implementations, the link failure recovery request message includes a first link failure recovery request message and a second link failure recovery request message; the first link failure recovery request message is used to indicate that a link failure occurs in at least one cell; and the second link failure recovery request message is used to indicate the cell identifiers of the M cells in which the link failure occurs and/or the information about the N first reference signal resources used to recover the links of the M cells, M≥1, N≥1, and M and N are integers.

With reference to the second aspect and the foregoing implementations, in some possible implementations, the link failure recovery request message includes a first link failure recovery request message and a second link failure recovery request message; the first link failure recovery request message indicates the cell identifiers of the M cells in which the link failure occurs; and the second link failure recovery request message indicates the information about the N first reference signal resources used to recover the links of the M cells, M≥1, N≥1, and M and N are integers.

With reference to the second aspect and the foregoing implementations, in some possible implementations, the method further includes: sending configuration information, where the configuration information is used to configure a first mapping relationship, where the first mapping relationship is used to indicate a correspondence between a first resource set and an antenna panel information set, the first resource set includes at least one first resource, the first resource is used to send the link failure recovery request message or the first link failure recovery request message, and the antenna panel information set includes at least one piece of first antenna panel information; and/or the first mapping relationship is used to indicate a correspondence between a first reference signal resource set and an antenna panel information set, the first reference signal resource set includes at least one first reference signal resource, and the antenna panel information set includes at least one piece of first antenna panel information.

With reference to the second aspect and the foregoing implementations, in some possible implementations, the method further includes: determining the first antenna panel information based on the first mapping relationship and the first resource; and/or determining the first antenna panel information based on the first mapping relationship and the first reference signal resource.

With reference to the second aspect and the foregoing implementations, in some possible implementations, the link failure recovery request message includes the first antenna panel information; or the second link failure recovery request message includes the first antenna panel information.

With reference to the second aspect and the foregoing implementations, in some possible implementations, the first antenna panel information and the information about the first reference signal resource are simultaneously received.

With reference to the second aspect and the foregoing implementations, in some possible implementations, the receiving an uplink signal based on the first antenna panel information includes: after K time units after the link failure recovery response message is sent, receiving the uplink signal based on the first antenna panel information, where K≥0, and K is an integer.

With reference to the second aspect and the foregoing implementations, in some possible implementations, the receiving an uplink signal based on the first antenna panel information includes: determining a power control parameter based on the first antenna panel information; and receiving the uplink signal based on the power control parameter.

With reference to the second aspect and the foregoing implementations, in some possible implementations, the uplink signal includes at least one of a physical uplink control channel PUCCH, a physical uplink shared channel PUSCH, a sounding reference signal SRS, or a demodulation reference signal DMRS.

According to a third aspect of the disclosure, a communications apparatus is provided, which does not fall under the scope of the claims. The communications apparatus includes: a determining unit, configured to determine first antenna panel information; and a communications unit, configured to send a link failure recovery request message, where the link failure recovery request message indicates the first antenna panel information, where the communications unit is further configured to send an uplink signal based on the first antenna panel information.

With reference to the third aspect, in some possible implementations, the link failure recovery request message indicates cell identifiers of M cells in which a link failure occurs and/or information about N first reference signal resources used to recover links of the M cells, M≥1, N≥1, and M and N are integers.

With reference to the third aspect and the foregoing implementation, in some possible implementations, the link failure recovery request message includes a first link failure recovery request message and a second link failure recovery request message; the first link failure recovery request message is used to indicate that a link failure occurs in at least one cell; and the second link failure recovery request message is used to indicate the cell identifiers of the M cells in which the link failure occurs and/or the information about the N first reference signal resources used to recover the links of the M cells, M≥1, N≥1, and M and N are integers.

With reference to the third aspect and the foregoing implementations, in some possible implementations, the link failure recovery request message includes a first link failure recovery request message and a second link failure recovery request message; the first link failure recovery request message indicates the cell identifiers of the M cells in which the link failure occurs; and the second link failure recovery request message indicates the information about the N first reference signal resources used to recover the links of the M cells, M≥1, N≥1, and M and N are integers.

With reference to the third aspect and the foregoing implementations, in some possible implementations, the communications unit is further configured to receive configuration information, where the configuration information is used to configure a first mapping relationship, where the first mapping relationship is used to indicate a correspondence between a first resource set and an antenna panel information set, the first resource set includes at least one first resource, the first resource is used to send the link failure recovery request message or the first link failure recovery request message, and the antenna panel information set includes at least one piece of first antenna panel information; and/or the first mapping relationship is used to indicate a correspondence between a first reference signal resource set and an antenna panel information set, the first reference signal resource set includes at least one first reference signal resource, and the antenna panel information set includes at least one piece of first antenna panel information.

With reference to the third aspect and the foregoing implementations, in some possible implementations, the determining unit is further configured to: determine the first resource based on the first mapping relationship and the first antenna panel information; and/or determine the first reference signal resource based on the first mapping relationship and the first antenna panel information.

With reference to the third aspect and the foregoing implementations, in some possible implementations, the link failure recovery request message includes the first antenna panel information; or the second link failure recovery request message includes the first antenna panel information.

With reference to the third aspect and the foregoing implementations, in some possible implementations, the first antenna panel information and the information about the first reference signal resource are simultaneously sent.

With reference to the third aspect and the foregoing implementations, in some possible implementations, the communications unit is further configured to: after K time units after the link failure recovery response message is received, send the uplink signal based on the first antenna panel information, where K≥0, and K is an integer.

With reference to the third aspect and the foregoing implementations, in some possible implementations, the determining unit is further configured to determine a power control parameter based on the first antenna panel information; and the communications unit is further configured to send the uplink signal based on the power control parameter.

With reference to the third aspect and the foregoing implementations, in some possible implementations, the uplink signal includes at least one of a physical uplink control channel PUCCH, a physical uplink shared channel PUSCH, a sounding reference signal SRS, or a demodulation reference signal DMRS.

According to a fourth aspect, a communications apparatus is provided, which does not fall under the scope of the claims. The communications apparatus includes: a communications unit, configured to receive a link failure recovery request message, where the link failure recovery request message indicates first antenna panel information; and a determining unit, configured to determine first antenna panel information, where the communications unit is further configured to receive an uplink signal based on the first antenna panel information.

With reference to the fourth aspect, in some possible implementations, the link failure recovery request message indicates cell identifiers of M cells in which a link failure occurs and/or information about N first reference signal resources used to recover links of the M cells, M≥1, N≥1, and M and N are integers.

With reference to the fourth aspect and the foregoing implementations, in some possible implementations, the link failure recovery request message includes a first link failure recovery request message and a second link failure recovery request message; the first link failure recovery request message is used to indicate that a link failure occurs in at least one cell; and the second link failure recovery request message is used to indicate the cell identifiers of the M cells in which the link failure occurs and/or the information about the N first reference signal resources used to recover the links of the M cells, M≥1, N≥1, and M and N are integers.

With reference to the fourth aspect and the foregoing implementations, in some possible implementations, the link failure recovery request message includes a first link failure recovery request message and a second link failure recovery request message; the first link failure recovery request message indicates the cell identifiers of the M cells in which the link failure occurs; and the second link failure recovery request message indicates the information about the N first reference signal resources used to recover the links of the M cells, M≥1, N≥1, and M and N are integers.

With reference to the fourth aspect and the foregoing implementations, in some possible implementations, the communications unit is further configured to send configuration information, where the configuration information is used to configure a first mapping relationship, where the first mapping relationship is used to indicate a correspondence between a first resource set and an antenna panel information set, the first resource set includes at least one first resource, the first resource is used to send the link failure recovery request message or the first link failure recovery request message, and the antenna panel information set includes at least one piece of first antenna panel information; and/or the first mapping relationship is used to indicate a correspondence between a first reference signal resource set and an antenna panel information set, the first reference signal resource set includes at least one first reference signal resource, and the antenna panel information set includes at least one piece of first antenna panel information.

With reference to the fourth aspect and the foregoing implementations, in some possible implementations, the determining unit is further configured to: determine the first antenna panel information based on the first mapping relationship and the first resource; and/or determine the first antenna panel information based on the first mapping relationship and the first reference signal resource.

With reference to the fourth aspect and the foregoing implementations, in some possible implementations, the link failure recovery request message includes the first antenna panel information; or the second link failure recovery request message includes the first antenna panel information.

With reference to the fourth aspect and the foregoing implementations, in some possible implementations, the first antenna panel information and the information about the first reference signal resource are simultaneously received.

With reference to the fourth aspect and the foregoing implementations, in some possible implementations, the communications unit is further configured to: after K time units after the link failure recovery response message is sent, receive the uplink signal based on the first antenna panel information, where K≥0, and K is an integer.

With reference to the fourth aspect and the foregoing implementations, in some possible implementations, the determining unit is further configured to determine a power control parameter based on the first antenna panel information; and the communications unit is further configured to receive the uplink signal based on the power control parameter.

With reference to the fourth aspect and the foregoing implementations, in some possible implementations, the uplink signal includes at least one of a physical uplink control channel PUCCH, a physical uplink shared channel PUSCH, a sounding reference signal SRS, or a demodulation reference signal DMRS.

According to a fifth aspect, a communications apparatus is provided, which does not fall under the scope of the claims. The communications apparatus has functions of implementing the terminal device in the method design in the first aspect. The functions may be implemented by hardware, or may be implemented by hardware by executing corresponding software. The hardware or the software includes one or more units corresponding to the foregoing functions.

According to a sixth aspect, a communications apparatus is provided, which does not fall under the scope of the claims. The communications apparatus has functions of implementing the network device (for example, a base station) in the method design in the second aspect. The functions may be implemented by hardware, or may be implemented by hardware by executing corresponding software. The hardware or the software includes one or more units corresponding to the foregoing functions.

According to a seventh aspect, a terminal device is provided, which does not fall under the scope of the claims. The terminal device includes a transceiver and a processor. Optionally, the terminal device further includes a memory. The processor is configured to control the transceiver to send and receive a signal. The memory is configured to store a computer program. The processor is configured to invoke the computer program from the memory and run the computer program, to enable the terminal device to perform the method according to any one of the possible implementations of the method design in the first aspect.

According to an eighth aspect, a network device is provided, which does not fall under the scope of the claims. The network device includes a transceiver and a processor. Optionally, the terminal device further includes a memory. The processor is configured to control the transceiver to send and receive a signal. The memory is configured to store a computer program. The processor is configured to invoke the computer program from the memory and run the computer program, to enable the terminal device to perform the method according to any one of the possible implementations of the method design in the second aspect.

According to a ninth aspect, a communications system is provided, which does not fall under the scope of the claims. The system includes the terminal device according to the third aspect and the network device according to the fourth aspect.

According to a tenth aspect, a communications apparatus is provided, which does not fall under the scope of the claims. The communications apparatus may be the terminal device in the foregoing method design, or a chip disposed in the terminal device. The communications apparatus includes a processor that is coupled to a memory, and the processor may be configured to execute instructions in the memory, to implement the method performed by the terminal device in any one of the possible implementations of the method design in the first aspect. Optionally, the communications apparatus further includes the memory. Optionally, the communications apparatus further includes a communications interface, and the processor is coupled to the communications interface.

When the communications apparatus is the terminal device, the communications interface may be a transceiver or an input/output interface.

When the communications apparatus is the chip disposed in the terminal device, the communications interface may be an input/output interface.

Optionally, the transceiver may be a transceiver circuit. Optionally, the input/output interface may be an input/output circuit.

According to an eleventh aspect, a communications apparatus is provided, which does not fall under the scope of the claims. The communications apparatus may be the network device in the foregoing method design, or a chip disposed in the network device. The communications apparatus includes a processor that is coupled to a memory, and the processor may be configured to execute instructions in the memory, to implement the method performed by the network device in any one of the possible implementations of the method design in the second aspect. Optionally, the communications apparatus further includes the memory. Optionally, the communications apparatus further includes a communications interface, and the processor is coupled to the communications interface.

When the communications apparatus is the network device, the communications interface may be a transceiver or an input/output interface.

When the communications apparatus is the chip disposed in the network device, the communications interface may be an input/output interface.

Optionally, the transceiver may be a transceiver circuit. Optionally, the input/output interface may be an input/output circuit.

According to a twelfth aspect, a computer program product is provided, which does not fall under the scope of the claims. The computer program product includes computer program code, and when the computer program code is run on a computer, the computer is enabled to perform the methods in the foregoing aspects.

According to a thirteenth aspect, a computer-readable medium is provided, which does not fall under the scope of the claims. The computer readable medium stores program code, and when the computer program code is run on a computer, the computer is enabled to perform the methods in the foregoing aspects.

According to the foregoing technical solutions, when a link between a terminal device and a network device fails, and the terminal device requests the network device to recover the link, information about an antenna panel for sending an uplink signal is indicated by using a link failure recovery request message. For example, the terminal device may indicate, in an explicit or implicit manner, information (a panel ID) about an antenna panel corresponding to a new link for sending the uplink signal. In this way, the network device may learn of the antenna panel corresponding to the new link, to recover transmission of the uplink signal in time, thereby improving link recovery reliability.

### BRIEF DESCRIPTION OF DRAWINGS

FIG. 1 is a schematic architectural diagram of a mobile communications system to which an embodiment of this application is applicable;
FIG. 2 is a schematic flowchart of a link failure recovery method;
FIG. 3 is a schematic flowchart of an example of a communication method according to an embodiment of this application;
FIG. 4 is a schematic block diagram of an example of a communications apparatus according to an embodiment of this application;
FIG. 5 is a schematic block diagram of another example of a communications apparatus according to an embodiment of this application;
FIG. 6 is a schematic diagram of a structure of a terminal device according to an embodiment of this application; and
FIG. 7 is a schematic diagram of a structure of a network device according to an embodiment of this application.

### DESCRIPTION OF EMBODIMENTS

The following describes the technical solutions in this application with reference to the accompanying drawings.

The technical solutions in the embodiments of this application may be applied to various communications systems, for example, a long term evolution (long term evolution, LTE) system, an LTE frequency division duplex (frequency division duplex, FDD) system, an LTE time division duplex (time division duplex, TDD) system, and a fifth generation (5th generation, 5G) mobile communications system or a new radio (new radio, NR) communications system. For example, the 5G mobile communications system includes a non-standalone (non-standalone, NSA) 5G mobile communications system and/or a standalone (standalone, SA) 5G mobile communications system. The technical solutions in the embodiments of this application may be further applied to a future mobile communications system and the like, for example, a sixth generation mobile communications system.

A terminal device in the embodiments of this application may be user equipment (user equipment, UE), an access terminal device, a subscriber unit, a subscriber station, a mobile station, a remote station, a remote terminal device, a mobile device, a user terminal device, a terminal device, a wireless communications device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application.

A network device in the embodiments of this application may be a device configured to communicate with the terminal device. The network device may be a base transceiver station (base transceiver station, BTS) in global system for mobile communications (global system for mobile communications, GSM) or code division multiple access (code division multiple access, CDMA), or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the network device may be a relay node, an access point, a vehicle-mounted device, a wearable device, a network device in a future 5G network, a network device in a future evolved PLMN network, or the like. This is not limited in the embodiments of this application.

In the embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in the embodiments of this application is not specifically limited in the embodiments of this application, provided that a program that records code of the method provided in the embodiments of this application can be run to perform communication according to the method provided in the embodiments of this application. For example, the method provided in the embodiments of this application may be performed by the terminal device or the network device, or a functional module that can invoke and execute the program in the terminal device or the network device.

In addition, aspects or features of this application may be implemented as a method, an apparatus, or a product that uses standard programming and/or engineering technologies. The term "product" may cover a computer program that is accessed from any computer-readable component, carrier, or medium. For example, a computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include, and/or carry instructions and/or data.

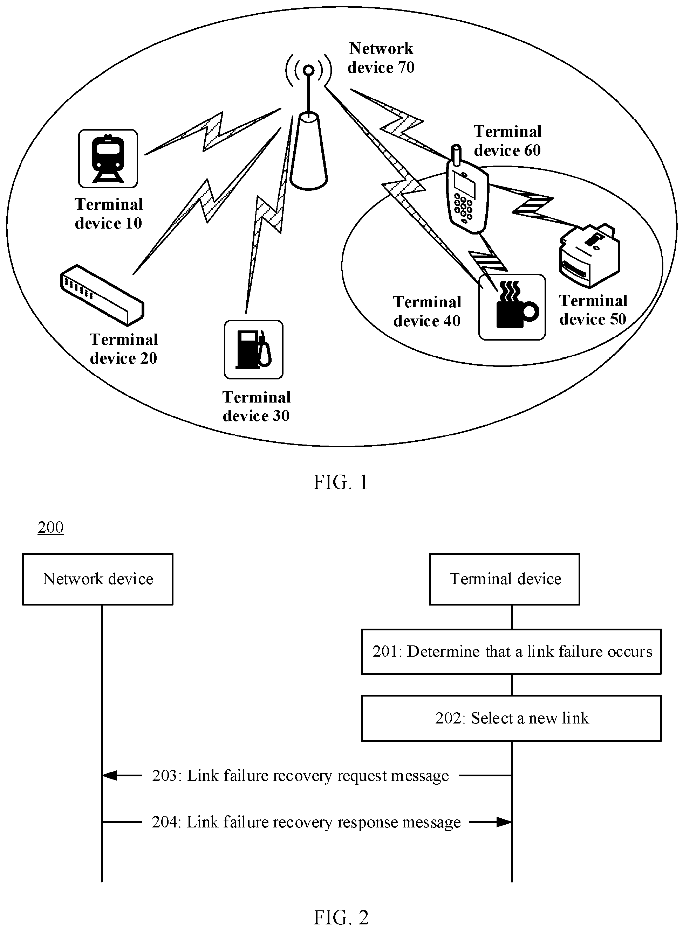

FIG. 1 is a schematic architectural diagram of a mobile communications system to which an embodiment of this application is applicable. The communications system in FIG. 1 may include at least one terminal device (for example, a terminal device 10, a terminal device 20, a terminal device 30, a terminal device 40, a terminal device 50, and a terminal device 60) and a network device 70. The network device 70 is configured to provide a communication service for the terminal device and enable the terminal device to access a core network. The terminal device may access a network by searching for a synchronization signal, a broadcast signal, or the like sent by the network device 70, to communicate with the network. The terminal device 10, the terminal device 20, the terminal device 30, the terminal device 40, and the terminal device 60 in FIG. 1 may perform uplink and downlink transmission with the network device 70. For example, the network device 70 may send downlink signals to the terminal device 10, the terminal device 20, the terminal device 30, the terminal device 40, and the terminal device 60, or may receive uplink signals sent by the terminal device 10, the terminal device 20, the terminal device 30, the terminal device 40, and the terminal device 60.

In addition, the terminal device 40, the terminal device 50, and the terminal device 60 may also be considered as a communications system. The terminal device 60 may send downlink signals to the terminal device 40 and the terminal device 50, or may receive uplink signals sent by the terminal device 40 and the terminal device 50.

It should be noted that the embodiments of this application may be applied to a communications system including one or more network devices, or may be applied to a communications system including one or more terminal devices. This is not limited in this application.

To facilitate understanding of this application, the following describes terms related to this application.

### 1. Control resource set (control resource set, CORESET)

To improve efficiency of blindly detecting a control channel by a terminal device, the concept of control resource set is proposed in an NR standard formulation process. A network device may configure one or more resource sets for the terminal device, to send a physical downlink control channel (physical downlink control channel, PDCCH). The network device may send a control channel to the terminal device on any control resource set corresponding to the terminal device. In addition, the network device further needs to notify the terminal device of another configuration, for example, a search space set, associated with the control resource set. Configuration information of all control resource sets varies. For example, frequency-domain widths vary, or time-domain lengths vary. It is extensible that the control resource set in this application may be a CORESET, a control region (control region), or an enhanced physical downlink control channel (enhanced-physical downlink control channel, ePDCCH) set (set) that is defined in a 5G mobile communications system.

A time-frequency position occupied by the PDCCH may be referred to as a downlink control region. In LTE, the PDCCH is always located on the first m (where possible values of m are 1, 2, 3, and 4) symbols of a subframe. It should be noted that an E-PDCCH and an R-PDCCH in LTE are not located on the first m symbols.

In NR, the downlink control region may be flexibly configured in the control resource set (control resource set, CORESET) and the search space set (search space set) by using RRC signaling.

Information such as a frequency domain position of the PDCCH or a control channel element (control channel element, CCE) and a quantity (where a maximum value is 3) of continuous time-domain symbols may be configured in the control resource set.

Information such as a PDCCH detection periodicity, an offset, and a start symbol in a slot may be configured in the search space set.

For example, if it may be configured in the search space set in such a manner that a PDCCH periodicity is one slot and a start symbol in time domain is a symbol 0, the terminal device may detect the PDCCH at a start position of each slot.

### 2. Spatial correlation parameter information

The spatial correlation parameter information may be quasi-colocation (quasi-colocation, QCL) information, or may be spatial relation (spatial relation) information. Usually, the QCL information is used to indicate a spatial correlation parameter of a downlink signal, and the spatial correlation parameter may also be referred to as a spatial correlation characteristic, for example, a PDCCH/physical downlink shared channel (physical downlink shared channel, PDSCH)/channel state information reference signal (channel state information reference signal, CSI-RS)/demodulation reference signal (demodulation reference signal, DMRS)/tracking reference signal (tracking reference signal, TRS). The spatial relation information is used to indicate a spatial correlation parameter of an uplink signal, and may also be referred to as a spatial correlation characteristic, for example, a physical uplink control channel (physical uplink control channel, PUCCH)/physical uplink shared channel (physical uplink shared channel, PUSCH)/sounding reference signal (sounding reference signal, SRS)/DMRS.

Quasi-colocation may also be referred to as quasi co-site or co-location. The QCL information may also be referred to as QCL assumption information. The QCL information is used to assist in describing receiving beamforming information by the terminal device and a receiving procedure.

The QCL information may be used to indicate a QCL relationship between two reference signals. A target reference signal may be usually a demodulation reference signal (demodulation reference signal, DMRS), a channel state information reference signal (channel state information reference signal, CSI-RS), or the like. A referenced reference signal or a source reference signal may be usually a CSI-RS, a synchronization signal and physical broadcast channel block (synchronous signal/PBCH block, SSB), a sounding reference signal (sounding reference signal, SRS), or the like. It should be understood that, a tracking reference signal (tracking reference signal, TRS) is also a type of CSI-RS. It should be understood that, the target reference signal may be usually a downlink signal.

Signals corresponding to antenna ports having a QCL relationship may have a same or similar spatial characteristic parameter (or referred to as a parameter), or a spatial characteristic parameter (or referred to as a parameter) of one antenna port may be used to determine a spatial characteristic parameter (or referred to as a parameter) of another antenna port that has a QCL relationship with the antenna port, or two antenna ports have a same or similar spatial characteristic parameter (or referred to as a parameter), or a difference between spatial characteristic parameters (or referred to as parameters) of two antenna ports is less than a threshold.

The spatial relation information is used to assist in describing transmit side beamforming information and a transmission procedure of the terminal device.

The spatial relation information is used to indicate a spatial transmit parameter relationship between two reference signals. The target reference signal may be usually a DMRS, an SRS, or the like. The referenced reference signal or the source reference signal may be usually a CSI-RS, an SRS, an SSB, or the like. It should be understood that, the target reference signal may be usually an uplink signal.

It should be understood that spatial characteristic parameters of two reference signals or channels that satisfy a QCL relationship are the same (close or similar), so that a spatial characteristic parameter of the target reference signal can be inferred based on a resource index of the source reference signal.

It should be further understood that spatial characteristic parameters of two reference signals or channels that satisfy spatial relation information are the same (close or similar), so that the spatial characteristic parameter of the target reference signal can be inferred based on the resource index of the source reference signal.

The spatial characteristic parameter includes one or more of the following parameters:
an angle of arrival (angle of arrival, AoA), a dominant (dominant) angle of arrival AoA, an average angle of arrival, a power angular spectrum (power angular spectrum, PAS) of the angle of arrival, an angle of departure (angle of departure, AoD), a dominant angle of departure, an average angle of departure, a power angular spectrum of the angle of departure, transmit beamforming of the terminal device, receive beamforming of the terminal device, spatial channel correlation, transmit beamforming of the network device, receive beamforming of the network device, an average channel gain, an average channel delay (average delay), a delay spread (delay spread), a Doppler spread (Doppler spread), a Doppler shift (doppler shift), a spatial reception parameter (spatial Rx parameters), or the like.

The foregoing angles may be decomposition values at different dimensions or a combination of decomposition values at different dimensions. The antenna ports may be antenna ports having different antenna port numbers, antenna ports that have a same antenna port number and that are used to send or receive information at different time points, on different frequencies, and/or on different code domain resources, and/or antenna ports that have different antenna port numbers and that are used to send or receive information at different time points, on different frequencies, and/or on different code domain resources.

These spatial characteristic parameters describe a characteristic of a spatial channel between an antenna port for the source reference signal and an antenna port for the target reference signal, and help the terminal device complete receive-side beamforming or a receiving processing process based on the QCL information. It should be understood that, the terminal device may receive the target reference signal based on information about a receive beam for the source reference signal indicated by the QCL information. These spatial characteristic parameters further help the terminal device complete transmit-side beamforming or a transmission processing process based on the spatial relation information. It should be understood that the terminal device may transmit the target reference signal based on information about a transmit beam for the source reference signal indicated by the spatial correlation information.

To reduce overheads of indicating the QCL information by the network device for the terminal device, in an optional implementation, the network device may indicate that a demodulation reference signal of the PDCCH or a physical downlink shared channel (physical downlink shared channel, PDSCH) and one or more of a plurality of reference signal resources previously reported by the terminal device satisfy a QCL relationship. For example, the reference signal may be a CSI-RS. Herein, an index of each reported CSI-RS resource corresponds to one transmit-receive beam pair previously established during measurement performed based on the CSI-RS resource. It should be understood that information about receive beams for the two reference signals or channels that satisfy the QCL relationship is the same, and the terminal device may infer, based on the indexes of the reference signal resources, information about receive beams for receiving the PDCCH or the PDSCH.

Four types of QCL are defined in an existing standard, and the network device may simultaneously configure one or more types of QCL for the terminal device, for example, QCL types A+D, and QCL types C+D:
QCL types A: Doppler shift, Doppler spread, average delay, delay spread
QCL types B: Doppler shift, Doppler spread
QCL types C: average delay, Doppler shift
QCL types D: Spatial Rx parameter

When the QCL relationship is a QCL type D relationship, the QCL relationship may be considered as a spatial QCL relationship. When the antenna ports satisfy the spatial QCL relationship, a QCL relationship (which is referred to as the spatial relation above) between a port of a downlink signal and a port of a downlink signal or between a port of an uplink signal and a port of an uplink signal may be that the two signals have a same AOA or AOD, and is used to indicate that the two signals have a same receive beam or transmit beam. For another example, a QCL relationship between a downlink signal and an uplink signal or between a port of an uplink signal and a port of a downlink signal may be that there is a correspondence between AOAs and AODs of the two signals, or that there is a correspondence between AODs and AOAs of the two signals. To be specific, beam reciprocity may be used to determine an uplink transmit beam based on a downlink receive beam or determine a downlink receive beam based on an uplink transmit beam.

From a perspective of a transmit end, if two antenna ports are spatially QCL-ed, it may mean that corresponding beam directions of the two antenna ports are consistent in space. From a perspective of a receive end, if two antenna ports are spatially QCL-ed, it may mean that the receive end can receive, in a same beam direction, signals sent by using the two antenna ports.

Signals transmitted on ports having a spatial QCL relationship may further have corresponding beams. The corresponding beams may include at least one of the following: a same receive beam, a same transmit beam, a transmit beam corresponding to a receive beam (corresponding to a reciprocity scenario), and a receive beam corresponding to a transmit beam (corresponding to a reciprocity scenario).

Signals transmitted on ports having a spatial QCL relationship may alternatively be understood as signals received or sent by using a same spatial filter (spatial filter). The spatial filter may be at least one of the following: precoding, a weight of an antenna port, a phase deflection of an antenna port, or an amplitude gain of an antenna port.

Signals transmitted on ports having a spatial QCL relationship may alternatively be understood as having corresponding beam pair links (beam pair links, BPLs). The corresponding BPLs include at least one of the following: a same downlink BPL, a same uplink BPL, an uplink BPL corresponding to a downlink BPL, and a downlink BPL corresponding to an uplink BPL.

Therefore, the spatial reception parameter (namely, the QCL type D) may be understood as a parameter used to indicate direction information of a receive beam.

In an example of this application, correspondences of some parameters may also be used in descriptions of a QCL scenario.

It should be understood that in a scenario applicable to QCL assumption in this application, there may alternatively be an association relationship between two reference signals, or may further be an association relationship between transmission objects.

### 3. Transmission configuration indicator (transmission configuration indicator, TCI) state

A TCI is used to indicate QCL information of a PDCCH/CORESET or a PDSCH. TCI information indicates that a reference signal included in a TCI and a DMRS of the PDCCH/PDSCH satisfy a QCL relationship, and is mainly used to indicate that during reception of the PDCCH/PDSCH, information such as a spatial reception parameter of the PDCCH/PDSCH is the same as, similar to, or approximate to information such as a spatial reception parameter of the reference signal included in the TCI.

One TCI state (TCI state) may include one or two referenced reference signals and an associated QCL type (QCL type). The QCL type may further be classified into four categories: A, B, C, and D that are different combinations or selections of {Doppler shift, Doppler spread, average delay, delay spread, spatial Rx parameter}. The TCI state includes QCL information, or the TCI state is used to indicate QCL information.

### 4. Synchronization signal and physical broadcast channel block (synchronous signal/PBCH block, SS/PBCH block)

An SS/PBCH block may also be referred to as an SSB. PBCH is an abbreviation of a physical broadcast channel (physical broadcast channel). The SSB includes at least one of a primary synchronization signal (primary synchronization signal, PSS), a secondary synchronization signal (secondary synchronization signal, SSS), and a PBCH. The SSB is a signal mainly used for cell searching, cell synchronization, and carrying broadcast information.

### 5. Concepts related to cells and carriers

### Carrier aggregation (carrier aggregation, CA):

A plurality of consecutive or non-consecutive component carriers are aggregated into a larger bandwidth (for example, up to 100 MHz), thereby satisfying a bandwidth requirement of the 3GPP.

### Component carrier (component carrier, CC):

Each carrier in multi-carrier aggregation may be referred to as a "CC". Each carrier includes one or more physical resource blocks (physical resource blocks, PRBs). There may be a corresponding physical downlink control channel (physical downlink control channel, PDCCH) on each carrier, and the PDCCH is used to schedule a physical downlink control channel (physical downlink control channel, PDSCH) on the respective CC. Alternatively, there may be no PDCCH on some carries. In this case, cross-carrier scheduling may be performed on the carriers, that is, a PDCCH on one CC is used to schedule a PDSCH on another CC. The terminal device may receive data on a plurality of CCs.

### Primary cell (primary cell, PCell):

APCell is a cell on which a CA terminal device camps. The CA terminal device corresponds to a physical uplink control channel (physical uplink control channel, PUCCH). Usually, only the PCell has a PUCCH.

### Primary secondary cell (primary secondary cell, PSCell):

A PSCell is a special secondary cell that is of a secondary eNodeB (secondary eNodeB, SeNB) and that is configured by a master eNodeB (master eNodeB, MeNB) for DC UE by using RRC connection signaling.

### Secondary cell (secondary cell, SCell):

An SCell is a cell configured for the CA terminal device by using RRC connection signaling, works on an SCC (secondary component carrier), and may provide more radio resources for the CA terminal device. In the SCell, there can be downlink transmission only or both downlink and uplink transmission.

### Special cell (special cell, SPCell):

In a dual connectivity (dual connectivity, DC) scenario, an SPCell is a PCell in a master cell group (master cell group, MCG) or a PSCell in a secondary cell group (secondary cell group, SCG). Otherwise, in a CA scenario, the SPCell is a PCell.

### MCG/SCG:

MCG: A group to which cells that provide services for the terminal device and that are served by a master eNodeB belong is a master cell group. In a dual connectivity mode, a group of serving cells associated with the MeNB includes a PCell and one or more SCells.

SCG: A group to which cells that provide services for the UE and that are served by a secondary eNodeB belong is a secondary cell group. In the dual connectivity mode, a PSCell and zero or more SCells are included.

### MeNB/SeNB:

An MeNB is a base station that serves a cell on which the DC terminal device camps.

An SeNB is another base station configured by the MeNB for the DC UE by using RRC connection signaling.

### 6. Beam (beam)

A beam is a communication resource. The beam may be a wide beam, a narrow beam, or another type of beam. A beamforming technology may be a beamforming technology or another technical means. The beamforming technology may be specifically a digital beamforming technology, an analog beamforming technology, or a hybrid digital/analog beamforming technology. Different beams may be considered as different resources. Same information or different information may be sent on different beams. Optionally, a plurality of beams having a same communication feature or similar communication features may be considered as one beam. One beam may include one or more antenna ports, configured to transmit a data channel, a control channel, a sounding signal, and the like. For example, a transmit beam may be distribution of signal strength formed in different directions in space after a signal is transmitted by using an antenna, and a receive beam may be distribution of signal strength, in different directions in space, of a radio signal received from an antenna. It may be understood that the one or more antenna ports forming the beam may alternatively be considered as one antenna port set.

Beams may be classified into a transmit beam and a receive beam of the network device, and a transmit beam and a receive beam of the terminal device. The transmit beam of the network device is used to describe transmit-side beamforming information of the network device, and the receive beam of the base station is used to describe receive-side beamforming information of the network device. The transmit beam of the terminal device is used to describe transmit-side beamforming information of the terminal device, and the receive beam of the terminal is used to describe receive-side beamforming information of the terminal device. In other words, the beam is used to describe beamforming information.

The beam may correspond to a time resource, and/or a space resource, and/or a frequency domain resource.

Optionally, the beam may further correspond to a reference signal resource (for example, a reference signal resource for beamforming) or beamforming information.

Optionally, the beam may further correspond to information associated with a reference signal resource of the network device. A reference signal may be a channel state information reference signal (channel state information reference signal, CSI-RS), an SSB, a demodulation reference signal (demodulation reference signal, DMRS), a phase tracking signal (phase tracking reference signal, PTRS), a tracking signal (tracking reference signal, TRS), or the like. The information associated with the reference signal resource may be a reference signal resource identifier, QCL information (especially the QCL type D), or the like. The reference signal resource identifier corresponds to a transmit-receive beam pair that is previously established during measurement based on the reference signal resource. The terminal may infer beam information based on the reference signal resource index.

Optionally, the beam may further correspond to a spatial domain filter (spatial filter or spatial domain filter), or a spatial domain transmission filter (spatial domain transmission filter).

Different types of reference signals are usually used in a communications system, where one type of reference signal is used to estimate a channel, to perform coherent demodulation on a received signal including control information or data, and another type of reference signal is used for measurement of a channel state or channel quality, to implement scheduling on the terminal device. The terminal device obtains channel state information (Channel State Information, CSI) through measurement based on channel quality of a CSI-RS. The CSI includes at least one of a rank indicator (rank indicator, RI), a precoding matrix indicator (precoding matrix indicator, PMI), a channel quality indicator (Channel Quality Indicator, CQI), or the like. The CSI information may be sent by the terminal device to a base station through a physical uplink control channel or a physical uplink shared channel.

With emergence of intelligent terminals, especially emergence of video services, current spectrum resources can hardly match an explosive growth of user requirements on a capacity. A high frequency band with a larger available bandwidth, especially a millimeter-wave band, gradually becomes a candidate frequency band of a next generation communications system. In addition, in a modern communications system, a multi-antenna technology is usually used to increase a capacity and coverage of the system, or improve user experience. Another advantage of using the high frequency band is that a size of a multi-antenna configuration can be greatly reduced, to facilitate site obtaining and deployment of more antennas. However, a difference from an operating frequency band in an existing system such as an LTE system lies in that, the high frequency band causes a larger path loss, and especially, a loss in radio propagation further becomes larger due to factors such as atmosphere and vegetation.

To overcome the larger propagation loss, a signal transmission mechanism that is based on a beamforming technology is applied, with the intention of using a relatively high antenna gain to compensate for the loss in a signal propagation process. Beamforming signals may include a broadcast signal, a synchronization signal, a cell-specific reference signal, and the like.

When a signal is transmitted based on the beamforming technology, once a user moves, a direction of a beamformed beam corresponding to the transmitted signal may not match a position of the user after the movement, and interruption to receiving of the signal may occur frequently. To track changes of the beamformed beam in the signal transmission process, channel quality measurement and result reporting based on the beamforming technology are introduced. The channel quality measurement may be based on a beamformed synchronization signal or cell-specific reference signal. The user performs handover between different beamformed beams more dynamically and frequently than handover between cells. Therefore, a dynamic measurement and reporting mechanism is required. Optionally, similar to CSI information reporting, reporting of a channel quality result of the beamformed beam may also be sent by the terminal device to the base station through a physical uplink control channel or a physical uplink shared channel.

After measuring a plurality of beams sent by the base station, the terminal device selects N better beams of the base station, and reports measurement information of the N better beams to the base station. The beam measurement information is beam state information (beam state information, BSI), and content thereof mainly includes a beam index and reference signal received power (reference signal received power, RSRP) of a beam. In a beam training process, the network device measures a plurality of beams sent by the terminal device, and notifies the terminal device of a better beam in the plurality of beams sent by the terminal device, for example, notifies the terminal device by using a reference signal resource, for example, a beam index 1. The receive beam of the terminal device is indicated by using a spatial RX parameter in the QCL, and the beam state information may be described as L1-RSRP related information.

Specifically, the beam training process includes the following steps.
(1) Select N best beam pairs (beam pair links, BPLs) (one BPL includes one transmit beam of the base station and one receive beam of the terminal device, or one BPL includes one transmit beam of the terminal device and one receive beam of the base station). The terminal device selects the transmit beam of the base station and/or the receive beam of the terminal based on beam sweeping performed by the network device, and the network device selects a transmit beam of the terminal and/or a receive beam of the base station based on beam sweeping performed by the terminal device.
(2) Update a transmit beam. The transmit beam may be a transmit beam of the base station, or may be a transmit beam of the terminal device. When the transmit beam is the transmit beam of the base station, the base station sends reference signals to the terminal device by using different transmit beams, and the terminal device receives, by using a same receive beam, the reference signals that are sent by the base station by using the different transmit beams, determines a best transmit beam of the base station based on the received signals, and then feeds back the best transmit beam of the base station to the base station, so that the base station updates the transmit beam. When the transmit beam is the transmit beam of the terminal, the terminal device sends reference signals to the base station by using different transmit beams, and the base station receives, by using a same receive beam, the reference signals that are sent by the terminal device by using the different transmit beams, determines a best transmit beam of the terminal device based on the received signals, and then feeds back the best transmit beam of the terminal device to the terminal device, so that the terminal device updates the transmit beam. The process of sending the reference signals by using different transmit beams may be referred to as beam sweeping, and the process of determining the best transmit beam based on the received signals may be referred to as beam matching.
(3) Update a receive beam. The receive beam may be a receive beam of the base station, or may be a receive beam of the terminal device. When the receive beam is the receive beam of the base station, the terminal device sends reference signals to the base station by using a same transmit beam, and the base station receives, by using different receive beams, the reference signals sent by the terminal device, and then determines a best receive beam of the base station based on the received signals, to update the receive beam of the base station. When the receive beam is the receive beam of the terminal device, the base station sends reference signals to the terminal device by using a same transmit beam, and the terminal device receives, by using different receive beams, the reference signals sent by the base station, and then determines a best receive beam of the terminal device based on the received signals, to update the receive beam of the terminal device.

During downlink signal transmission, both the transmit beam of the base station and the receive beam of the terminal device may dynamically change, and there may be a plurality of best receive beams determined by the terminal device based on the received signals. To enable the terminal device to determine a receive beam of the terminal device, the terminal device may feed back information about the plurality of receive beams to the network device, and the network device may indicate the receive beam of the terminal to the terminal device by sending beam indication information to the terminal device. When the terminal device uses analog beamforming, the terminal device may precisely determine the receive beam of the terminal based on the beam indication information sent by the network device. Therefore, beam sweeping time of the terminal device can be shortened, and power is saved.

In the beam training process described above, the base station obtains N better beam pairs BPLs for communication with the terminal device, where the beam pairs BPLs are <Bx, B'x> and <By, B'y>, where Bx represents a transmit beam of the base station, B'x represents a receive beam of the terminal device, By represents a transmit beam of the terminal device, and B'y represents a receive beam of the base station. In a subsequent process of communication with the terminal device, the base station uses the N BPLs for data transmission. However, because of blocking in a communication process and a poor diffraction capability in a high frequency channel, a current serving beam is blocked, and a signal cannot be further transmitted. To prevent sudden communication interruption caused by beam blocking, a corresponding mechanism needs to be introduced to detect beam quality and quickly recover a link when the beam is blocked.

### 7. Antenna port (antenna port)

An antenna port may also be referred to as a port for short. The antenna port is a transmit antenna identified by a receive end device or a transmit antenna that can be distinguished in space. One antenna port may be configured for each virtual antenna, the virtual antenna may be a weighted combination of a plurality of physical antennas, and each antenna port may correspond to one reference signal port.

### 8. Bandwidth part (bandwidth part, BWP)

The network device may configure one or more downlink/uplink bandwidth parts for the terminal device. The BWP may include consecutive PRBs in frequency domain, and the BWP is a subset in a bandwidth of the terminal device. A minimum granularity of the BWP in frequency domain is one PRB. A system may configure one or more bandwidth parts for the terminal device, and the plurality of bandwidth parts may overlap (overlap) in frequency domain.

In a single-carrier scenario, one terminal device can only have one active BWP at a same moment, and the terminal device can only receive data/a reference signal or send data/a reference signal on the active BWP (active BWP).

In this application, in a case applicable to a BWP scenario, a specific BWP may alternatively be a bandwidth set on a specific frequency, or a set including a plurality of RBs.

### 9. Reference signal configured for link failure detection and link failure recovery

To detect and recover a link fault, the network device may configure, for the terminal device, a reference signal resource set (for example, a beam failure detection RS resourceconfig, a beam failure detection RS, or failure detection resources) (which may also be referred to as a link failure detection reference signal resource set) used for beam failure detection. The network device may further configure, for the terminal device, a reference signal resource set (a candidate beam RS list, a candidate beam RS identification resource, a beam failure candidate beam resource, a candidate beam identification RS, or a candidate beam list) (which may also be referred to as a candidate reference signal resource set or a link failure recovery reference signal resource set) used to recover a link between the terminal device and the network device. In addition, a reference signal used to detect the link failure may alternatively be implicitly indicated, and a reference signal associated with a TCI indicating a PDCCH is used as the reference signal for detecting the link failure. The reference signal is a reference signal that satisfies a QCL relationship with a DMRS on the PDCCH and that is periodically sent. An RS in a beam failure detection RS set and the demodulation reference signal on the physical downlink control channel PDCCH satisfy the QCL relationship or use a same TCI state as the PDCCH. When channel quality information (for example, reference signal received power (reference signal receiving power, RSRP), a channel quality indicator (channel quality indicator, CQI), a block error rate (block error ratio, BLER), a signal to interference plus noise ratio (signal to Interference plus noise ratio, SINR), and a signal-to-noise ratio (signal noise ratio, SNR)) of some or all reference signals in the set is less than a predetermined threshold, it is determined that a communications link is faulty. Being less than the predetermined threshold may be being less than the predetermined threshold for W consecutive times or being less than the predetermined threshold for W times in a time period. Optionally, the predetermined threshold may be the same as a radio link failure out-of-synchronization (radio link failure OOS (out of sync)) threshold. The predetermined threshold may be referred to as a link failure detection threshold, or may be referred to as a link failure threshold. It should be understood that, any threshold used for link failure detection may be the predetermined threshold, and a name of the predetermined threshold is not limited in the present invention.

After a beam failure, the terminal device needs to select, from the candidate reference signal resource set, a reference signal resource whose channel quality information (such as RSRP or a CQI) is greater than the predetermined threshold, to recover the communications link. Optionally, the predetermined threshold may be configured by the network device. Herein, a beam failure detection RS is used by the terminal to detect channel quality of a transmit beam of the network device, and the transmit beam is a beam used when the network device communicates with the terminal. A candidate beam identification RS is a reference signal set used by the terminal device to initiate link reconfiguration after the terminal device determines that a communications link fault occurs on the transmit beam of the network device.

It should be understood that, in the embodiments of this application, a communication failure may also be referred to as a communications link failure, a communications link fault, a link fault, a link failure, a communication fault, a beam failure, a beam fault, or the like. In the embodiments of this application, these concepts have a same meaning. The communication failure may mean that signal quality of a reference signal used for PDCCH beam failure detection is less than or equal to a preset threshold. After the communications link is faulty, the terminal device needs to select, from a candidate reference signal resource set, a reference signal resource whose channel quality information (such as RSRP, RSRQ, a CQI, or an SINR) is greater than the predetermined threshold, to recover the communications link.

Optionally, the predetermined threshold may be configured by the network device, or may be a predefined threshold. For example, when the network device does not configure the threshold, a threshold used for mobility measurement is used by default. The predetermined threshold may be referred to as a link failure recovery threshold, or may be referred to as a link recovery threshold. It should be understood that, any threshold used for link failure recovery may be the predetermined threshold, and a name of the predetermined threshold is not limited in the present invention. The candidate beam identification RS is a reference signal set used by the terminal device to initiate link reconfiguration after the terminal device determines that the communications link fault occurs on the transmit beam of the network device.

In the embodiments of this application, communication failure recovery may also be referred to as recovery of communication between the network device and the terminal device, communication fault recovery, link failure recovery, link fault recovery, beam failure recovery, beam fault recovery, communications link failure recovery, communications link fault recovery, link reconfiguration, or the like.

During specific implementation, the two sets, namely, the reference signal resource set used for beam failure detection and the reference signal resource set used to recover the link between the terminal device and the network device may alternatively have other names. This is not specifically limited in this application.

It should be understood that, in the embodiments of this application, a "message" may also be referred to as "information".

In the embodiments of this application, a "link failure recovery request message" and "link failure recovery request information" are equivalent concepts. The link failure recovery request information may also be referred to as communication failure recovery request information, communication fault recovery request information, link failure recovery request information, link fault recovery request information, beam failure recovery request information, beam fault recovery request information, communications link failure recovery request information, communications link fault recovery request information, communication recovery request information, link recovery request information, beam recovery request information, communications link recovery request information, link reconfiguration request information, reconfiguration request information, and the like.

In the embodiments of this application, communication failure recovery response information may also be referred to as communication failure response information, beam failure recovery response information, beam failure response information, communications link fault recovery response information, communications link fault response information, communications link failure recovery response information, communications link failure response information, beam fault recovery response information, beam fault response information, link reconfiguration response information, link fault recovery response information, link fault response information, link failure recovery response information, link failure response information, communication fault recovery response information, communication fault response information, reconfiguration response information, or the like. It should be understood that, in this application, the communication failure recovery response information may be referred to as response information for short.

In the embodiments of this application, optionally, a link failure recovery request may mean sending a signal on a resource used to carry the communication failure recovery request. The link failure recovery response information may mean receiving, on a control resource set and/or a search space set that are/is used to send a link failure recovery response, downlink control information (downlink control information, DCI) whose cyclic redundancy check (cyclic redundancy check, CRC) is scrambled by using a cell radio network temporary identifier (cell radio network temporary identifier, C-RNTI). The link failure recovery response information may alternatively be DCI scrambled by using other information (for example, DCI scrambled by using a BFR-RNTI). The link failure recovery response information may alternatively be data scheduled by using the DCI. The link failure recovery response information may alternatively be an ACK of the data scheduled by using the DCI. The link failure recovery response information may alternatively be one of the following information: DCI scrambled by using the cell radio network temporary identifier C-RNTI, DCI scrambled by using a modulation and coding scheme cell radio network temporary identifier MCS-C-RNTI, downlink control information DCI in a dedicated search space, DCI scrambled by using a dedicated radio network temporary identifier RNTI, DCI scrambled by using a random access radio network temporary identifier RA-RNTI, DCI including a preset state value, DCI including transmission configuration indicator TCI information, quasi-colocation QCL indication information of a cell in which a link failure occurs, or DCI in a preset format, where the DCI in the preset format indicates newly transmitted data. This is not limited in the embodiments of this application.

It should be understood that, in the embodiments of this application, the link failure, the link failure recovery, the link failure recovery request message, and the link failure recovery response message may alternatively have other names. This is not specifically limited in this application.

It should be understood that, in this application, a link recovery failure of a cell may be understood as that the terminal device no longer sends a link failure recovery request message corresponding to the cell, or may be understood as stopping timing of a link failure recovery clock, or may be understood as stopping counting of a link failure recovery counter, or the like. Alternatively, a link recovery failure of a cell may be understood as that no response information of the cell is received yet when a link failure recovery clock corresponding to the cell expires and/or counting of a link failure recovery counter exceeds a maximum quantity of times or reaches the maximum quantity of times. The link failure recovery counter is used to count a quantity of times that the link failure recovery request message is sent. Optionally, a media access control (media access control, MAC) layer of the terminal device maintains a link failure recovery timer (beam failure recovery timer) and a link failure recovery counter (beam failure recovery counter). The link failure recovery timer is used to control an entire time length of link failure recovery. The link failure recovery counter is used to limit a quantity of times that the terminal device sends a link failure recovery request. When the link failure recovery counter reaches a maximum value, the terminal device considers that the link failure recovery fails, and stops a link failure recovery process. A time length of recovery of the recovery timer and a count value of the recovery counter may be configured by the network device, or may be preset values.

It should be understood that, in this application, a link recovery success of a cell may be understood as that the terminal device detects response information of the cell.

It should be further understood that in the embodiments of this application, the "cell" may be understood as a "serving cell" or a "carrier".

Optionally, the cell includes at least one of a downlink carrier, an uplink (uplink, UL) carrier, and a supplementary uplink (supplementary uplink, SUL) carrier. Specifically, the cell may include a downlink carrier and an uplink carrier; or the cell may include a downlink carrier and a supplementary uplink carrier; or the cell includes a downlink carrier, an uplink carrier, and a supplementary uplink carrier.

Optionally, a carrier frequency of the supplementary uplink carrier is lower than that of the uplink carrier, to improve uplink coverage.

Optionally, usually, in an FDD system, a carrier frequency of an uplink carrier is different from that of a downlink carrier. In a TDD system, a carrier frequency of an uplink carrier is the same as that of a downlink carrier.

It should be further understood that, in the embodiments of this application, an uplink resource is on the uplink carrier, and a downlink resource is on the downlink carrier.

It should be further understood that, in the embodiments of this application, the uplink carrier may be a normal uplink carrier, or may be a supplementary uplink (supplementary uplink, SUL) carrier.

It should be understood that, "detection" in the embodiments of this application may be understood as "receiving", or may be understood as "decoding".

It should be understood that, in this application, a time unit may be one or more radio frames, one or more subframes, one or more slots, one or more mini-slots (mini slots), one or more orthogonal frequency division multiplexing (orthogonal frequency division multiplexing, OFDM) symbols, or the like defined in an LTE system or a 5G NR system, or may be a time window including a plurality of frames or subframes, for example, a system information (system information, SI) window.

It should be understood that, "occurrence of a link failure" may be replaced with "a link failure" in the embodiments of this application.

It should be further understood that, in the embodiments of this application, the "preset threshold" may be replaced with the "predetermined threshold", or the "preset threshold" and the "predetermined threshold" are equivalent concepts.

It should be understood that, in this application, "a first reference signal" is a corresponding reference signal in a first reference signal resource set, the first reference signal resource set may be a candidate reference signal set, and the first reference signal resource set is a set of reference signal resources used to recover links of M cells in which a link failure occurs. The corresponding reference signal in the first reference signal resource set may be a reference signal of the M cells, or may be a reference signal of another cell. In other words, the corresponding reference signal resource in the first reference signal resource set may be a reference signal resource of the M cells, or may be a reference signal resource of another cell. This is not limited in this application.

It should be further understood that, in the embodiments of this application, interaction between the terminal device and the network device is usually corresponding. To be specific, the terminal device sends information, and correspondingly, the network device also receives the information. Alternatively, the network device sends information, and correspondingly, the terminal device also receives the information. Further, physical resources used by the network device and the terminal device to send and receive information or rules, for example, periodicities or priority sequences applied by the network device and the terminal device to send and receive the information are also corresponding. This is not limited in the embodiments of this application.

### 10. Time unit

It should be understood that, in this application, a time unit may be one or more radio frames, one or more subframes, one or more slots, one or more mini-slots (mini slots), one or more orthogonal frequency division multiplexing (orthogonal frequency division multiplexing, OFDM) symbols, or the like defined in the LTE system or the 5G NR system, or may be a time window including a plurality of frames or subframes, for example, a system information (system information, SI) window.

A time domain resource used for wireless communication between the network device and the terminal device may be divided into a plurality of time units. In addition, in the embodiments of this application, the plurality of time units may be consecutive, or a preset interval may be set between some adjacent time units. This is not particularly limited in the embodiments of this application.

In the embodiments of this application, a length of one time unit is not limited. For example, one time unit may be one or more subframes, one or more slots, or one or more symbols.

In the embodiments of this application, a symbol is also referred to as a time domain symbol, and may be an orthogonal frequency division multiplexing (orthogonal frequency division multiplexing, OFDM) symbol, or may be a single-carrier frequency division multiple access (single carrier frequency division multiple access, SC-FDMA) symbol, where SC-FDMA is also referred to as orthogonal frequency division multiplexing with transform precoding (orthogonal frequency division multiplexing with transform precoding, OFDM with TP).

In this embodiment of this application, there is a time sequence relationship between the plurality of time units in time domain, and time lengths corresponding to any two time units may be the same or may be different.

It should be understood that, for definitions of the foregoing terms, refer to the conventional technology. However, with continuous development of technologies, the foregoing definitions may also change. This is not limited in the embodiments of this application.

FIG. 2 is a schematic flowchart of a link failure recovery method. As shown in FIG. 2, the link failure recovery method 200 includes the following content.

201: A terminal device measures a beam failure detection reference signal resource set (beam failure detection RS set), to determine that a link between the terminal device and a network device fails. For example, the terminal device may detect a current link, and determine that the current link fails.

It should be understood that, a link in this application may be understood as a "beam". That is, the terminal fails to transmit a signal by using a current beam.

For example, when the terminal device determines that channel quality information of a beam failure detection RS or channel quality information of all or some reference signals in a beam failure detection RS set is less than or equal to a link failure detection threshold for N consecutive times, the terminal device may determine that a link between the terminal device and a network device is faulty.

It should be understood that, in this embodiment of this application, a manner in which the terminal device determines that the link between the terminal device and the network device fails is not limited to the foregoing example, and that the link between the terminal device and the network device fails may alternatively be determined in another determining manner. This is not limited in this application.

202: The terminal device selects a new link, that is, the terminal device selects a new beam.

For example, the terminal device measures channel quality information of a candidate reference signal set (candidate beam identification RS), and determines, based on the channel quality information of the candidate beam identification RS, a reference signal (new identified beam) whose channel quality is greater than or equal to a second preset threshold, that is, determines a new beam.

203: After selecting the new link, the terminal device sends a link failure recovery request message (beam failure recovery request, BFRQ) to the network device, and correspondingly, the network device receives the BFRQ sent by the terminal device.

The BFRQ includes a reference signal (new identified beam or new beam) whose channel quality is greater than or equal to a link failure recovery threshold and that is identified by the terminal device in step 202. The terminal device may notify, in an explicit or implicit manner, the network device of the new identified beam or the reference signal resource. The terminal device may further report, by using one or more link failure recovery request messages, at least one piece of content such as new beam information or an identifier of a cell in which a link failure occurs. Alternatively, it may be understood that the BFRQ indicates one or more of new beam information, an identifier of a cell in which a link failure occurs, or a link failure event.

It should be understood that, in this embodiment of this application, the terminal device may send the BFRQ to the network device, and recover, by using the network device, the failure of the link between the terminal device and the network device. Alternatively, the terminal device may send the BFRQ to another network device, and recover, by using the another network device, the fault of the link between the terminal device and the network device.

BFRQ information of a PCell in NR may be reported by using a physical random access channel (physical random access channel, PRACH) resource. A base station configures one or more PRACH resources, and configures each PRACH resource to be associated with one reference signal. The reference signal is a reference signal used for link failure recovery. The reference signal may be a corresponding reference signal in a candidate reference signal resource set configured by the base station. The terminal device determines that the link fails, and selects a PRACH resource associated with the new beam to send a signal. In this manner, the terminal device may implicitly indicate the new beam information.

For example, an uplink resource set that is configured by the network device for a first cell and that is used to send a link failure recovery request message of the first cell is referred to as a first resource set. A quantity of PRACH resources included in the first resource set is equal to a quantity of downlink reference signals in a candidate reference signal resource set of the first cell. In other words, one PRACH resource is associated with one downlink reference signal. When there is uplink and downlink reciprocity, a transmit beam used when the terminal device sends information on one PRACH resource may be a transmit beam corresponding to a receive beam of a downlink reference signal associated with the PRACH resource. In other words, the terminal device may send the information on the PRACH resource by using the transmit beam corresponding to the receive beam. When there is no uplink and downlink reciprocity, in an optional implementation, one PRACH resource in the first resource set is associated with one downlink reference signal and one uplink reference signal. The terminal device may determine, based on the determined PRACH resource associated with the downlink reference signal, the uplink reference signal associated with the PRACH resource, to send information on the PRACH resource by using a transmit beam of the uplink reference signal.

The BFRQ information in NR may be reported in one step. The BFRQ information may be carried on a PUSCH resource, a PUCCH resource, or a PRACH resource. The BFRQ information may indicate the identifier of the cell in which the link failure occurs and/or the new beam information.

In a possible implementation, the BFRQ information may be further reported in two steps by using a BFRQ 1 and a BFRQ 2. The BFRQ 1 may be carried on a PUCCH resource or a PRACH resource, and the BFRQ 2 may be carried on a PUSCH resource or a PUCCH resource.

Optionally, the BFRQ 1 indicates the link failure event, and the BFRQ 2 indicates the identifier of the cell in which the link failure occurs and/or the new beam information. Alternatively, the BFRQ 1 indicates the link failure event and/or the identifier of the cell in which the link failure occurs, and the BFRQ 2 indicates the new beam information.

It should be understood that, the BFRQ information is carried on the PUSCH resource, and it may be understood that the BFRQ information is reported by using a MAC-CE, or it may be understood that the BFRQ information is reported through aperiodic CSI reporting (which is also referred to as layer 1 aperiodic reporting, L1 CSI report). This is not limited in this application.

It should be further understood that, optionally, in a process in which the terminal device sends the BFRQ to the network device, a media access control (media access control, MAC) layer of the terminal device maintains a timer (beam failure recovery timer) and a counter (beam failure recovery counter). The timer (beam failure recovery timer) is used to control an entire time length of link failure recovery. The counter (beam failure recovery counter) is used to limit a quantity of times that the terminal device sends a link failure recovery request. When the timer expires or the counter reaches a maximum value, the terminal device considers that the link failure recovery fails, and stops a link failure recovery process. A time length of recovery of the recovery timer and a count value of the recovery counter may be configured by the network device, or may be preset values.

Correspondingly, after receiving the BFRQ sent by the terminal device, the network device determines the new link based on information about the new link that is included in the BFRQ.

204: The network device sends a beam failure recovery response message (beam failure recovery response, BFRR) to the terminal device, and correspondingly, the terminal device detects a control resource set (CORESET) and a search space set (search space set), and receives the BFRR.

The BFRR may be sent based on the information about the new link or the information about the reference signal that is indicated in 203.

Optionally, the CORESET and/or the search space set are/is a dedicated CORESET and/or a dedicated search space set configured by the network device for the terminal device, and are/is used by the network device to send link failure response information on a downlink control resource after the terminal device sends a link failure request.

The terminal device receives the BFRR based on the information about the new link that is included in the BFRQ. If the terminal device receives the link failure recovery response information, the terminal device determines that the link failure recovery succeeds.

It should be understood that, in the link failure recovery method 200, step 201 may be performed earlier than step 202, or step 201 and step 202 may be performed simultaneously. A time sequence of performing step 201 and step 202 is not limited in this application.

It should be further understood that, in the link failure recovery method 200, step 202 may be performed earlier than step 203, or step 202 may be performed later than step 203, or step 202 and step 203 may be performed simultaneously. A time sequence of performing step 202 and step 203 is not limited in this application.

In the foregoing descriptions, when determining the link failure, the terminal device may identify the information about the new link or information about the new beam, and may notify the network device of the information about the new link, to perform link recovery.

In NR, one terminal device may have a plurality of antenna panels (panels), and each antenna panel may correspond to one or more beams. When configuring to send an uplink signal to the terminal, the network device may indicate, in an explicit or implicit manner, antenna panel information corresponding to the uplink signal, and the terminal device may send the uplink signal based on the antenna panel information. However, after the terminal device determines that a link failure occurs in a cell, an original uplink may also fail. After link failure recovery, the antenna panel information corresponding to the uplink signal may not be used (which may be understood as that a specific antenna panel cannot be used for communication). After the link failure recovery, the uplink signal cannot be sent based on the antenna panel information.

To improve link recovery reliability, this application provides a communication method. After determining that a link failure occurs, the terminal device indicates, by using a link failure recovery request message, information about an antenna panel for sending an uplink signal, so that in a link recovery process, the terminal device may send an uplink signal based on the antenna panel; and the network device may also obtain the information about the antenna panel, to recover transmission of the uplink signal in time, thereby improving the link recovery reliability.

In addition, when configuring to send an uplink signal to the terminal, the network device may indicate antenna panel information in an explicit or implicit manner, and the terminal device may send the uplink signal based on the antenna panel information. It should be understood that, the antenna panel information may be information about one or more active antenna panels that is previously reported by the terminal device or previously indicated by the network device. However, after the terminal device determines that a link failure occurs in a cell, an original uplink may also fail. After link failure recovery, the antenna panel information may not be used (which may be understood as that a specific antenna panel cannot be used for communication). After the link failure recovery, the uplink signal cannot be sent based on the antenna panel information.

To improve link recovery reliability, this application provides a communication method. After determining that a link failure occurs, the terminal device indicates, by using a link failure recovery request message, information about an active antenna panel, so that in a link recovery process, the terminal device may send an uplink signal based on the antenna panel; and the network device may also obtain the information about the active antenna panel, to recover transmission of the uplink signal in time, thereby improving the link recovery reliability.

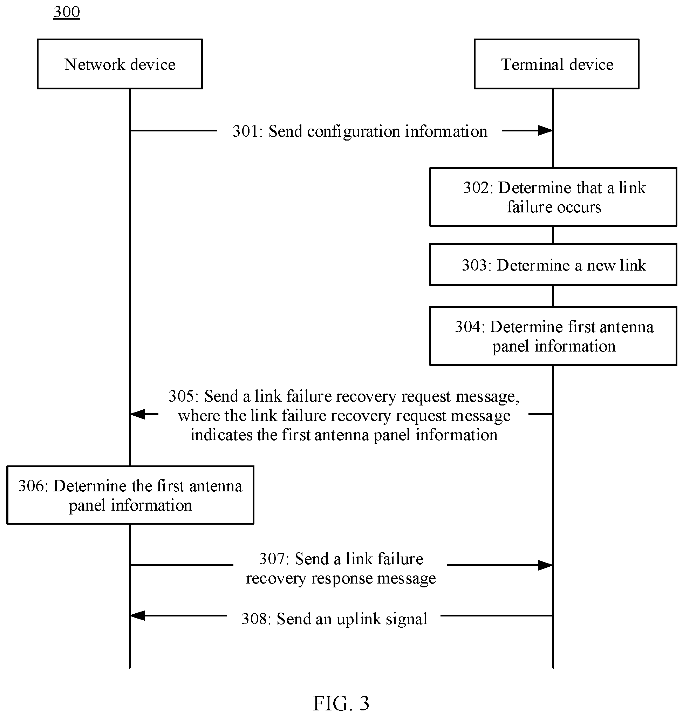

FIG. 3 is a schematic flowchart of an example of a link failure recovery method according to an embodiment of this application.

It should be understood that, in descriptions of this embodiment of this application, a network device may provide one PCell and at least one SCell for a terminal device. Each step of the method 300 is described in detail by using the terminal device and the network device as execution bodies.

By way of example, and not limitation, the method 300 may alternatively be performed by a chip used in the terminal device and a chip used in the network device. This is not limited in this application.

301: The network device sends configuration information to the terminal device, and correspondingly, the terminal device receives the configuration information sent by the network device.

Specifically, the configuration information is used to configure a first mapping relationship for the terminal device.

In a possible implementation, the first mapping relationship is used to indicate a correspondence between a first resource set and an antenna panel information set.

In this application, the first resource set may include at least one first resource, the first resource is used to send a link failure recovery request message (BFRQ), and the antenna panel information set includes at least one piece of first antenna panel information.

It should be understood that, in this application, the first resource set may also be referred to as a "first resource information set", the first resource information set includes at least one piece of first resource information, and one piece of first resource information indicates one first resource. Similarly, the first reference signal resource set may also be referred to as a "first reference signal resource information set", the first reference signal resource information set includes at least one piece of first reference signal resource information, and one piece of first reference signal resource information indicates one first reference signal resource.

It should be further understood that, in the descriptions of this embodiment of this application, meanings of a mapping relationship, a correspondence, and an association relationship are the same or similar.

It should be understood that, the antenna panel information set includes at least one piece of antenna panel information. The terminal device may have a plurality of antenna panels. For example, the terminal device has four antenna panels. The first antenna panel may indicate one or more of the antenna panels. This is not limited in this application.

It should be further understood that, the antenna panel information may be a virtual identifier of the antenna panel, an identifier that implicitly indicates a reference signal resource of the antenna panel, an antenna port group identifier (UE antenna port group ID), an antenna group identifier (UE antenna group ID), a beam group identifier, a reference signal resource group identifier, or an antenna panel identifier. This is not limited in this application.

It should be understood that, the antenna panel information in the present invention may be replaced with virtual identification information of the antenna panel, identification information that implicitly indicates a reference signal resource of the antenna panel, antenna port group identification information, antenna group identification information, beam group identification information, reference signal resource group identification information, or antenna panel identification information. The antenna panel information may also be referred to as another term. This embodiment of this application is not limited thereto. The antenna panel (panel) may also be referred to as an antenna set, a radio transceiver unit (transceiver unit, TXRU) (or referred to as a radio transceiver set), an antenna unit, an antenna group, a horizontal antenna set, a vertical antenna set, an antenna element, an antenna port set, or the like. The antenna panel may also be referred to as another term. This embodiment of this application is not limited thereto.

It should be understood that, one piece of antenna panel information may correspond to one power control parameter and/or one timing advance (Timing advance, TA) parameter. It should be understood that, the antenna panel information in the present invention may be uplink antenna panel information, or may be downlink antenna panel information. Optionally, the terminal device and the network device may determine one or more antenna panels, antenna port groups, or antenna groups based on one piece of antenna panel information.

It should be further understood that, the correspondence between the first resource set and the antenna panel information set herein may be understood as a correspondence between the first resource set and an antenna panel set, a correspondence between the first resource information set and an antenna panel set, or a correspondence between the first resource set and the antenna panel information set. A specific expression form is not limited in the present invention.

It should be further understood that, the correspondence between the first resource information set and the antenna panel information set may be specifically that one first resource corresponds to one piece of antenna panel information, that is, one resource is associated with one piece of antenna panel information; or one first resource corresponds to a plurality of pieces of antenna panel information, that is, one resource is associated with a plurality of pieces of antenna panel information. This is not limited in this application.

In another possible implementation, the first mapping relationship is used to indicate a correspondence between a first reference signal resource set and an antenna panel information set.

It should be understood that, in this application, the first reference signal resource set may also be referred to as a "first reference signal resource information set", the first reference signal resource information set includes at least one piece of first reference signal resource information, and one piece of first reference signal resource information indicates one first reference signal resource.

In this application, the first reference signal resource set includes at least one first reference signal resource, or the first reference signal resource information set includes at least one piece of first reference signal resource information, and the antenna panel information set includes at least one piece of first antenna panel information.

It should be further understood that, in this application, "a first reference signal" is a corresponding reference signal in the first reference signal resource set, the first reference signal resource set may be a candidate reference signal set, and the first reference signal resource set is a set of reference signal resources used to recover links of M (where M≥1, and M is an integer) cells in which a link failure occurs. A corresponding reference signal in the first reference signal resource set may be a reference signal of the M cells, or may be a reference signal of another cell. In other words, a corresponding reference signal resource in the first reference signal resource set may be a reference signal resource of the M cells, or may be a reference signal resource of another cell. This is not limited in this application.

The correspondence between the first reference signal resource information set and the antenna panel information set herein may be understood as a correspondence between the first reference signal resource set and an antenna panel set, a correspondence between the first reference signal resource information set and an antenna panel set, or a correspondence between the first reference signal resource set and the antenna panel information set. A specific expression form is not limited in the present invention.

It should be further understood that, the correspondence between the first reference signal resource set and the antenna panel information set herein may be understood as that one first reference signal resource corresponds to one piece of antenna panel information, that is, one first reference signal resource is associated with one piece of antenna panel information; or one first reference signal resource corresponds to a plurality of pieces of antenna panel information, that is, one first reference signal resource is associated with a plurality of pieces of antenna panel information. This is not limited in this application.

Optionally, the reference signal resource set may be a reference signal resource set including a CSI-RS, or may be a reference signal resource set including an SSB, or may be a reference signal resource set including a CSI-RS or an SSB. The reference signal resource set may alternatively be a reference signal resource set including an SRS.

Through step 301, the network device configures the first mapping relationship for the terminal device, and the network device and the terminal device may determine the first antenna panel information by using the first resource for sending the link failure recovery request message, and further determine a first antenna panel. Alternatively, the network device and the terminal device may determine the first antenna panel information by using the first reference signal resource for sending the link failure recovery request message, and further determine a first antenna panel. It should be understood that, a time at which the network device configures the first mapping relationship for the terminal device in step 301 is not limited in this application.

302: The terminal device determines that a current link fails. Specifically, the terminal device detects a working state of the current link, and may detect whether a link failure occurs on the current link.

It should be understood that, for step 302, refer to step 201 in the method 200. Specifically, when the terminal device determines that channel quality information of a beam failure detection RS or channel quality information of all or some reference signals in a beam failure detection RS set is less than or equal to a first preset threshold for N consecutive times, the terminal device may determine that a link between the terminal device and the network device is faulty.

It should be further understood that, in this embodiment of this application, a manner in which the terminal device determines that the link between the terminal device and the network device fails is not limited to the foregoing example, and that the link between the terminal device and the network device fails may alternatively be determined in another determining manner. This is not limited in this application.

303: The terminal device identifies a new link.

It should be understood that, for step 303, refer to step 201 in the method 200. Specifically, the terminal device measures a reference signal resource, and identifies a reference signal used to recover the link between the terminal device and the network device.

It should be further understood that, the new link determined by the terminal device is a first reference signal resource in the first reference signal resource set. For example, the terminal device determines, based on channel quality information of the candidate reference signal set (candidate beam identification RS), a reference signal (new identified beam) whose channel quality is greater than or equal to a link failure recovery threshold. The determining process herein may be performing determining by measuring the channel quality information of the candidate reference signal set.

In a possible implementation, the terminal device may identify no new link, and therefore there may be a case in which the terminal device cannot perform determining. For example, the terminal device cannot identify, from the candidate reference signal resource set, a reference signal greater than or equal to the link failure recovery threshold.

For example, if the terminal device identifies no new link, the terminal device may report, to the network device, an identifier of a cell in which a link failure occurs and information indicating whether a new link is identified for each cell. If no new link is identified for a cell, the network device may reconfigure a new resource set based on the information, and notify the terminal device of the new resource set by using downlink control information DCI. In other words, a reference signal in another resource set is triggered by using the DCI, and the reference signal in the resource set is reported for link recovery. In this way, link failure recovery reliability can be improved. This is not limited in this application.

Alternatively, if the terminal device identifies no new link, the terminal device does not need to detect link failure recovery response information, but waits for TCI reconfiguration signaling with low power consumption, to receive a new resource set, so that power can be saved.

304: The terminal device determines the first antenna panel information. Specifically, the terminal device can determine the first antenna panel information after determining the new link.

305: The terminal device sends a link failure recovery request message to the network device, where the link failure recovery request message indicates the first antenna panel information. Correspondingly, the network device receives the link failure recovery request message sent by the terminal device.

It should be understood that, the link failure recovery request message may indicate that the link failure occurs in the M cells and indicate information about N first reference signal resources used to recover the links of the M cells. In addition, the link failure recovery request message may further indicate the first antenna panel information. M≥1, N≥1, and M and N are integers.

It should be understood that, in this application, a value relationship between M and N is not limited. For example, when each of the M cells in which the link failure occurs may correspond to one first reference signal resource, M=N; when each of the M cells in which the link failure occurs may correspond to a plurality of first reference signal resources, M<N; when some of the M cells in which the link failure occurs may have no new link, that is, there is no corresponding first reference signal resource, M>N. This is not limited in this application.

It should be understood that, the terminal device may report L pieces of first reference signal resource information corresponding to each of the M cells in which the link failure occurs, where L is greater than or equal to 0. When L is greater than or equal to 1, L may be configured by the network device or reported by the terminal device.

It should be further understood that, the M cells may be some cells in which a link failure occurs, or all cells in which a link failure occurs. This is not limited in this application.

It should be understood that, optionally, when the network device does not configure the link failure recovery threshold, the terminal device reports an index of the first reference signal resource and channel quality on the first reference signal resource; when the network device configures the link failure recovery threshold, the terminal device reports an index of the first reference signal resource. A type of the channel quality may be at least one of RSRP, RSRQ, an SINR, or a CQI.

Optionally, the link failure recovery request message may alternatively be a scheduling link failure recovery request message. This is not limited in this application.

Specifically, there may be the following four cases for a process in which the terminal device sends the link failure recovery request message to the network device:

### Case 1

In a possible implementation, when the link failure recovery request message (BFRQ) is in a form of one message and reported by the terminal device to the network device, the link failure recovery request message may indicate that the link failure occurs in the M cells and/or indicate the information about the N first reference signal resources used to recover the links of the M cells

It should be understood that, in this case, identification information of the cell in which the link failure occurs may be implicitly indicated by using a cell in which the resource for carrying the link failure recovery request message is located.

Optionally, the network device may configure, for the terminal device, a plurality of first resources used to carry the link failure recovery request message, and the network device further configures the first mapping relationship for the terminal device by using the configuration information, where the first mapping relationship is used to indicate the correspondence between the first resource set and the antenna panel information set. In other words, the first mapping relationship is used to indicate an association relationship between the plurality of first resources used to carry the link failure recovery request message and a plurality of pieces of antenna panel information.

For example, the terminal device may determine the first resource based on the first mapping relationship and the first antenna panel information, and send the link failure recovery request message by using the first resource. Correspondingly, after receiving the link failure recovery request message sent by the terminal device, the network device determines the first antenna panel information based on the first mapping relationship and the first resource for carrying the link failure recovery request message, so that the network device may learn of antenna panel information after link recovery.

For example, the network device configures a first resource #a1 to be associated with first antenna panel information #c1, and a first resource #a2 to be associated with first antenna panel information #c2. The terminal device identifies that quality of a signal received on the first antenna panel information #c2 is greater than the link failure recovery threshold, and the terminal device selects the first resource #a2 having an association relationship with the first antenna panel information #c2 to send a first link failure recovery request message. After receiving a signal on the first resource #a2, the network device may learn that antenna panel information identified by the terminal device and used for subsequent uplink signal sending is the first antenna panel information #c2.

Based on the foregoing manner, the terminal device may implicitly report the first antenna panel information to the network device by using an association relationship between the first resource for carrying the link failure recovery request message and the first antenna panel, so that the network device may learn of an antenna panel corresponding to the new link, to recover transmission of an uplink signal in time.

Alternatively, optionally, the network device configures the first mapping relationship for the terminal device by using the configuration information, where the first mapping relationship is used to indicate the correspondence between the first reference signal resource set and the antenna panel information set. In other words, the first mapping relationship is used to indicate an association relationship between a plurality of first reference signal resources used for link recovery and a plurality of pieces of antenna panel information.

For example, the terminal device may determine the first reference signal resource based on the first mapping relationship and the first antenna panel information, and report the information about the first reference signal resource to the network device by using the link failure recovery request message. Correspondingly, after receiving the link failure recovery request message sent by the terminal device, the network device determines the first antenna panel information based on the first mapping relationship and the information about the first reference signal resource that is included in the link failure recovery request message, so that the network device may learn of antenna panel information after link recovery.

For example, the network device configures a first reference signal resource #b1 to be associated with the first antenna panel information #c1, and a first reference signal resource #b2 to be associated with the first antenna panel information #c2. The terminal device identifies that quality of a signal received on the first antenna panel information #c2 is greater than the link failure recovery threshold, or the terminal device identifies that quality of a signal received on the first reference signal resource #b2 is greater than the link failure recovery threshold, or the terminal device identifies that quality of a signal on the first reference signal resource #b2 that is received based on the first antenna panel information #c2 is greater than the link failure recovery threshold. The terminal device selects the first resource #a2 having an association relationship with the first antenna panel information #c2 to send the link failure recovery request message. After receiving the signal on the first resource #a2, the network device can learn that antenna panel information identified by the terminal device and used to send an uplink signal is the first antenna panel information #c2. In addition, after receiving the signal on the first resource #a2, the network device can learn that a reference signal identified by the terminal device and used for link recovery is a resource corresponding to the first reference signal resource #b2.

It should be understood that, the first resource may be a PRACH resource, or the first resource may be a PUCCH resource. The first reference signal resource may be a CSI-RS resource, or the first reference signal resource may be an SSB resource. This is not limited in this application.

It should be noted that the first resource may be a resource of the PCell or a resource of the SCell. For example, in the link failure recovery process in the case 1, when a link failure occurs in a first cell, the first resource for carrying the link failure recovery request message may be a resource of the first cell, or may be a resource of a second cell other than the first cell. This is not limited in this application. The first cell may be the PCell, or may be the SCell. The second cell may be the PCell, or may be the SCell. For example, when a link failure occurs in the SCell, the first resource may be the resource of the PCell, that is, the resource of the PCell is used to recover a link of the SCell.

Based on the foregoing manner, the terminal device may implicitly report the first antenna panel information to the network device by using the first reference signal resource indicated in the link failure recovery request message and the association relationship between the first reference signal resource set and the first antenna panel information set, so that the network device may learn of the antenna panel corresponding to the new link, to recover transmission of the uplink signal in time.

### Case 2

In a possible implementation, when the link failure recovery request message (BFRQ) is in a form of one message and reported by the terminal device to the network device, the link failure recovery request message may indicate cell identifiers of the M cells in which the link failure occurs and/or the information about the N first reference signal resources used to recover the links of the M cells.

It should be understood that, in the case 2, for reporting content of the link failure recovery request message, refer to related descriptions in the case 1. Details are not described herein again. However, a difference lies in that, in the case 2, the first resource for carrying the link failure recovery request message may be a PUSCH resource or a PUCCH resource, and the first reference signal resource may be a CSI-RS resource, or the first reference signal resource may be an SSB resource. This is not limited in this application.

It should be understood that, the link failure recovery request message may be MAC-CE information, or may be uplink control information reported at a layer 1 (for example, may be similar to UCI information reported by using CSI).

Similarly, it should be noted that, the first resource for the link failure recovery request message may be a resource of the PCell or a resource of the SCell. For example, in the link failure recovery process in the case 2, when a link failure occurs in a first cell, the first resource for carrying the link failure recovery request message may be a resource of the first cell, or may be a resource of a second cell other than the first cell. This is not limited in this application. The first cell may be the PCell, or may be the SCell. The second cell may be the PCell, or may be the SCell. For example, when a link failure occurs in the SCell, the first resource may be the resource of the PCell, that is, the resource of the PCell is used to recover a link of the SCell.

### Case 3

In a possible implementation, when the link failure recovery request message (BFRQ) is in a form of two messages and reported by the terminal device to the network device, that is, the link failure recovery request message (BFRQ) includes a first link failure recovery request message (BFRQ 1) and a second link failure recovery request message (BFRQ 2), the first link failure recovery request message may be used to indicate that a link failure occurs in at least one cell; and the second link failure recovery request message is used to indicate cell identifiers of the M cells in which the link failure occurs and/or the information about the N first reference signal resources used to recover the links of the M cells.

It should be understood that, in this implementation, the second link failure recovery request message (BFRQ 2) may include the cell identifiers of the M cells in which the link failure occurs and/or the information about the N first reference signal resources used to recover the links of the M cells. A resource for carrying the second link failure recovery request message (BFRQ 2) may be a second resource.

Optionally, the network device may configure, for the terminal device, a plurality of first resources used to carry the first link failure recovery request message, and the network device further configures the first mapping relationship for the terminal device by using the configuration information, where the first mapping relationship is used to indicate the correspondence between the first resource set and the antenna panel information set. In other words, the first mapping relationship is used to indicate an association relationship between the plurality of first resources used to carry the first link failure recovery request message and a plurality of pieces of antenna panel information.

For example, the terminal device may determine the first resource based on the first mapping relationship and the first antenna panel information, and send the first link failure recovery request message by using the first resource. Correspondingly, after receiving the first link failure recovery request message sent by the terminal device, the network device determines the first antenna panel information based on the first mapping relationship and the first resource for carrying the first link failure recovery request message, so that the network device may learn of antenna panel information after link recovery.

For example, the network device configures a first resource #a1 to be associated with first antenna panel information #c1, and a first resource #a2 to be associated with first antenna panel information #c2. The terminal device identifies that quality of a signal received on the first antenna panel information #c2 is greater than the link failure recovery threshold, and the terminal device selects the first resource #a2 having an association relationship with the first antenna panel information #c2 to send the first link failure recovery request message. After receiving a signal on the first resource #a2, the network device can learn that antenna panel information identified by the terminal device and used for subsequent uplink signal sending is the first antenna panel information #c2.

Based on the foregoing manner, the terminal device may implicitly report the first antenna panel information to the network device by using an association relationship between the first resource for carrying the first link failure recovery request message and the first antenna panel, so that the network device may learn of an antenna panel corresponding to the new link, to recover transmission of an uplink signal in time.

Alternatively, optionally, the network device configures the first mapping relationship for the terminal device by using the configuration information, where the first mapping relationship is used to indicate the correspondence between the first reference signal resource set and the antenna panel information set. In other words, the first mapping relationship is used to indicate an association relationship between a plurality of first reference signal resources used for link recovery and a plurality of pieces of antenna panel information.

For example, the terminal device may determine the first reference signal resource based on the first mapping relationship and the first antenna panel information, and report the information about the first reference signal resource to the network device by using the second link failure recovery request message. Correspondingly, after receiving the second link failure recovery request message sent by the terminal device, the network device determines the first antenna panel information based on the first mapping relationship and the information about the first reference signal resource that is included in the second link failure recovery request message, so that the network device may learn of the antenna panel information after the link recovery.

Therefore, in this implementation, the first antenna panel information may be further indicated by using the second link failure recovery request message. For example, the network device configures a first reference signal resource #b1 to be associated with the first antenna panel information #c1, and a first reference signal resource #b2 to be associated with the first antenna panel information #c2. After determining that a link failure occurs, the terminal device sends the first link failure recovery request message to the network device, where the first link failure recovery request message indicates that a link failure occurs in at least one cell. The terminal device identifies that quality of a signal received on the first antenna panel information #c2 is greater than the link failure recovery threshold, or the terminal identifies that quality of a signal received on the first reference signal resource #b2 is greater than the link failure recovery threshold, or the terminal device identifies that quality of a signal on the first reference signal resource #b2 that is received based on the first antenna panel information #c2 is greater than the link failure recovery threshold. The terminal device sends the second link failure recovery request message, where the second link failure recovery request message includes a cell identifier #x of an i^{th} cell in which a link failure occurs, and the corresponding first reference signal resource #b2 for recovering the cell. After receiving the second link failure recovery request message, the network device learns that first antenna panel information identified by the terminal device and used to send an uplink signal of the i^{th} cell is the first antenna panel information #c2.

It should be noted that the first resource may be a resource of the PCell or a resource of the SCell, and the second resource for carrying the second link failure recovery request message may be a resource of the PCell or a resource of the SCell. For example, in the link failure recovery process in the case 3, the first resource for carrying the first link failure recovery request message may be a resource of the PCell, and the second resource for carrying the second link failure recovery request message may also be a resource of the PCell. When a link failure occurs in the SCell, the first resource may be the resource of the PCell, that is, the resource of the PCell is used to recover a link of the SCell. Alternatively, when the SCell has an uplink resource, the second resource for carrying the second link failure recovery request message is the resource of the SCell that has the uplink resource.

Based on the foregoing manner, the terminal device may implicitly report the first antenna panel information to the network device by using an association relationship between the first reference signal resource included in the second link failure recovery request message and the first antenna panel, so that the network device may learn of an antenna panel corresponding to the new link, to recover transmission of the uplink signal in time.

### Case 4

In a possible implementation, when the link failure recovery request message (BFRQ) is in a form of two messages and reported by the terminal device to the network device, that is, the link failure recovery request message includes a first link failure recovery request message and a second link failure recovery request message, the first link failure recovery request message indicates cell identifiers of the M cells in which the link failure occurs; and the second link failure recovery request message indicates the information about the N first reference signal resources used to recover the links of the M cells.

Optionally, the network device may configure, for the terminal device, a plurality of first resources used to carry the first link failure recovery request message, and the network device further configures the first mapping relationship for the terminal device by using the configuration information, where the first mapping relationship is used to indicate the correspondence between the first resource set and the antenna panel information set. In other words, the first mapping relationship is used to indicate an association relationship between the plurality of first resources used to carry the first link failure recovery request message and a plurality of pieces of antenna panel information.

For example, the terminal device may determine the first resource based on the first mapping relationship and the first antenna panel information, and send the first link failure recovery request message by using the first resource. Correspondingly, after receiving the first link failure recovery request message sent by the terminal device, the network device determines the first antenna panel information based on the first mapping relationship and the first resource for carrying the first link failure recovery request message, so that the network device may learn of antenna panel information after link recovery.

Based on the foregoing manner, the terminal device may implicitly report the first antenna panel information to the network device by using an association relationship between the first resource for carrying the first link failure recovery request message and the first antenna panel, so that the network device may learn of an antenna panel corresponding to the new link, to recover transmission of an uplink signal in time. Optionally, the network device may configure, for the terminal device, an association relationship between a plurality of reference signal resources used for link failure recovery and a plurality of pieces of antenna panel information. The terminal device indicates the antenna panel information by selecting information that is about a first reference signal and that is to be reported.

Alternatively, optionally, the network device configures the first mapping relationship for the terminal device by using the configuration information, where the first mapping relationship is used to indicate the correspondence between the first reference signal resource set and the antenna panel information set. In other words, the first mapping relationship is used to indicate an association relationship between a plurality of first reference signal resources used for link recovery and a plurality of pieces of antenna panel information.

For example, the terminal device may determine the first reference signal resource based on the first mapping relationship and the first antenna panel information, and report the information about the first reference signal resource to the network device by using the second link failure recovery request message. Correspondingly, after receiving the second link failure recovery request message sent by the terminal device, the network device determines the first antenna panel information based on the first mapping relationship and the information about the first reference signal resource that is included in the second link failure recovery request message, so that the network device may learn of the antenna panel information after the link recovery.

Therefore, in this implementation, the first antenna panel information may be further indicated by using the second link failure recovery request message. For example, the network device configures a first reference signal resource #b1 to be associated with the first antenna panel information #c1, and a first reference signal resource #b2 to be associated with the first antenna panel information #c2. After determining that a link failure occurs, the terminal device sends the first link failure recovery request message to the network device, where the first link failure recovery request message indicates the cell identifiers of the M cells in which the link failure occurs. The terminal device identifies that quality of a signal received on the first antenna panel information #c2 is greater than the link failure recovery threshold, or the terminal identifies that quality of a signal received on the first reference signal resource #b2 is greater than the link failure recovery threshold, or the terminal device identifies that quality of a signal on the first reference signal resource #b2 that is received based on the first antenna panel information #c2 is greater than the link failure recovery threshold. The terminal device sends the second link failure recovery request message, where the second link failure recovery request message includes the first reference signal #b2 corresponding to an i^{th} cell in the M cells. After receiving the second link failure recovery request message, the network device learns that antenna panel information identified by the terminal device and used to send an uplink signal of the i^{th} cell is the first antenna panel information #c2.

It should be understood that, in the foregoing four cases, the first resource for carrying the first link failure recovery request message may be a PRACH resource or may be a PUCCH resource. In the case 3 and the case 4, the second resource for carrying the second link failure recovery request message may be a PUSCH resource, a PRACH resource, or a PUCCH resource, and the first reference signal resource may be a CSI-RS resource, or the first reference signal resource may be an SSB resource. This is not limited in this application.

Optionally, the second resource may be indicated or activated by using response information (a BFRR) of the first link failure recovery request message.

Specifically, in a possible implementation, after receiving the first link failure recovery request message, the network device may further send the response information of the first link failure recovery request message. The response information of the first link failure recovery request message may be used to indicate the second resource allocated to the terminal. That is, the network device allocates a resource to the terminal. The second resource may be an aperiodic resource (or referred to as a dynamic resource). In this method, the network device determines, depending on whether there is a cell (indicated by using the first link failure recovery request message) in which a link failure occurs in a current network, whether to allocate the second resource. If the network device receives the first link failure recovery request message, the network device can learn that there is a cell in which a link failure occurs in the current network, and the network device may dynamically allocate the second resource, so that the terminal device further reports cells in which a link failure occurs, and/or reports information (first reference signal information) of new links of the cells requiring link failure recovery.

Because a link failure event is an unexpected event, in the foregoing method, a periodic resource for sending a link failure recovery request message does not need to be reserved in advance, so that resource overheads can be effectively reduced.

In another possible implementation, the response information of the first link failure recovery request message may be further used to activate a second resource, that is, the second resource originally allocated by the network device to the terminal device, and activation is triggered by using the response information of the first link failure recovery request message. The active second resource is a semi-persistent (semi-persistent) resource or a static (periodic) resource. For example, the second resource may be a semi-persistent resource or a static resource (for example, a PUSCH, a PUCCH, or a PRACH) activated by using the response information of the first link failure recovery request message after the first link failure recovery request message or downlink control information (downlink control information, DCI) signaling after the first link failure recovery request message.

In this method, the network device determines, depending on whether there is a cell (indicated by using the first link failure recovery request message) in which a link failure occurs in a current network, whether to activate the second resource. If the network device receives the first link failure recovery request message, the network device can learn that there is a cell in which a link failure occurs in the current network, and the network device activates the second resource, so that the terminal device further reports cells in which a link failure occurs, and/or reports information (first reference signal information) of new links of the cells requiring link failure recovery.

Optionally, the second resource may be configured by using higher layer signaling or system information, or may be a preset resource.

Specifically, the second resource may be configured by the network device for the terminal device, and sent to the terminal by using the higher layer signaling or the system information. Alternatively, the second resource may be agreed on by the network device and the terminal device in advance, or may be set by the terminal in advance. This is not limited in this application.

Optionally, the second resource may alternatively be a resource having an association relationship with the first resource.

Specifically, there may be a mapping relationship between the second resource and the first resource. In this way, when learning of the first resource, the terminal device may determine the second resource by using the mapping relationship.

Optionally, the association relationship between the first resource and the second resource may be configured by using system information such as a master information block (master information block, MIB) or a system information block (system information block, SIB), or configured by using radio resource control (radio resource control, RRC) signaling or media access control (media access control, MAC)-control element (control element, CE) signaling. The system information or the signaling may be sent before the first link failure recovery request message is sent.

Optionally, the first resource and the second resource may alternatively be configured by using the foregoing system information or signaling.

Based on the foregoing method, the second link failure recovery request message may no longer be sent by using the resource that is allocated by using the response information of the first link failure recovery request message, but may be directly sent on the second resource. This can effectively reduce a link recovery delay, and increase a link recovery speed.

It should be noted that the network device may configure a plurality of resources for the terminal to transmit the first link failure recovery request message, and configure a plurality of resources for the terminal to transmit the second link failure recovery request message. The terminal may select one or more resources from the plurality of resources used to transmit the first link failure recovery request message, as the first resource, and may further select one or more resources from the plurality of resources used to transmit the second link failure recovery request message, as the second resource. The plurality of resources used to transmit the first link failure recovery request message and the plurality of resources used to transmit the second link failure recovery request message may be separately configured by using the system information such as the MIB or the SIB, or configured by using signaling such as the RRC signaling or the MAC-CE signaling.

Optionally, the second resource may alternatively be a resource associated with the first link failure recovery request message. Optionally, the network device may configure, by using the system information such as the MIB or the SIB, or by using the RRC signaling or the MAC-CE signaling, a plurality of resources used to send the first link failure recovery request message, a plurality of resources used to send the second link failure recovery request message, and an association relationship between the plurality of resources used to send the first link failure recovery request message and the plurality of resources used to send the second link failure recovery request message. The terminal may select one resource from the plurality of resources used to transmit the first link failure recovery request message, as the first resource, and may further select one resource from the plurality of resources used to transmit the second link failure recovery request message, as the second resource. Each first resource may be associated with one or more second resources, and sizes of the second resources associated with all the first resources may be different. The terminal device sends the second link failure recovery request message on a second resource associated with a first resource on which the terminal device sends the first link failure recovery request message.

It should be noted that, the network device may provide the PCell or the SCell. For example, in the link failure recovery process in the case 4, the first resource for carrying the first link failure recovery request message may be a resource of the PCell, and the second resource for carrying the second link failure recovery request message may also be a resource of the PCell. When a link failure occurs in the SCell, the first resource may be the resource of the PCell, that is, the resource of the PCell is used to recover a link of the SCell. Alternatively, when the SCell has an uplink resource, the second resource for carrying the second link failure recovery request message is the resource of the SCell that has the uplink resource.

In the foregoing four cases, that the terminal device reports the first antenna panel information to the network device by using an implicit indication method is separately described. In another possible implementation, the terminal device may explicitly report the first antenna panel information. In other words, the terminal device reports the first antenna panel information by using the link failure recovery request message.

Specifically, there may be the following three cases for that the terminal device reports the first antenna panel information to the network device in the explicit manner:

### Case 1

In a possible implementation, when the link failure recovery request message (BFRQ) is in a form of one message and reported by the terminal device to the network device, the link failure recovery request message may indicate cell identifiers of the M cells in which the link failure occurs and/or the information about the N first reference signal resources used to recover the links of the M cells, and the link failure recovery request message includes the first antenna panel information.

It should be understood that, in this implementation, the link failure recovery request message may directly include the first antenna panel information, for example, include an identifier of the first antenna panel information.

For example, the terminal device determines that a link failure occurs. The terminal device identifies that quality of a signal received on first antenna panel information #c2 is greater than the link failure recovery threshold, or the terminal identifies that quality of a signal received on a first reference signal resource #b2 is greater than the link failure recovery threshold, or the terminal device identifies that quality of a signal on a first reference signal resource #b2 that is received based on first antenna panel information #c2 is greater than the link failure recovery threshold. The terminal device sends the link failure recovery request message, where the link failure recovery request message includes a cell identifier #x of an i^{th} cell in which a link failure occurs, the first reference signal #b2 corresponding to the i^{th} cell, and the first antenna panel information #c2. After receiving the link failure recovery request message, the network device learns that antenna panel information identified by the terminal device and used to send an uplink signal of the i^{th} cell is the first antenna panel information #c2.

It should be understood that, in the case 1, the first resource for carrying the link failure recovery request message may be a PUSCH resource or a PUCCH resource, and the first reference signal resource may be a CSI-RS resource, or the first reference signal resource may be an SSB resource. This is not limited in this application.

It should be noted that the first resource may be a resource of the PCell or a resource of the SCell. For example, in the link failure recovery process in the case 2, when a link failure occurs in a first cell, the first resource for carrying the link failure recovery request message may be a resource of the first cell, or may be a resource of a second cell other than the first cell. This is not limited in this application. The first cell may be the PCell, or may be the SCell. The second cell may be the PCell, or may be the SCell. For example, when a link failure occurs in the SCell, the first resource may be the resource of the PCell, that is, the resource of the PCell is used to recover a link of the SCell.

Based on the foregoing manner, the terminal device may explicitly report the first antenna panel information to the network device by using the link failure recovery request message, so that the network device may learn of antenna panel information corresponding to the new link, to recover transmission of the uplink signal in time.

### Case 2

In another possible implementation, when the link failure recovery request message (BFRQ) is in a form of two messages and reported by the terminal device to the network device, that is, the link failure recovery request message (BFRQ) includes a first link failure recovery request message (BFRQ 1) and a second link failure recovery request message (BFRQ 2), the first link failure recovery request message may be used to indicate that a link failure occurs in at least one cell; and the second link failure recovery request message is used to indicate cell identifiers of the M cells in which the link failure occurs and/or the information about the N first reference signal resources used to recover the links of the M cells.

Optionally, the second link failure recovery request message includes the first antenna panel information.

Optionally, the first antenna panel information and the information about the first reference signal resource are simultaneously sent.

In this implementation, the second link failure recovery request message (BFRQ 2) may include the cell identifiers of the M cells in which the link failure occurs and/or the information about the N first reference signal resources used to recover the links of the M cells. In this case, the second link failure recovery request message (BFRQ 2) may be carried on a PUSCH.

In this implementation, the terminal device explicitly reports the first antenna panel information. For example, after determining that a link failure occurs, the terminal device sends the first link failure recovery request message to the network device, where the first link failure recovery request message indicates that a link failure occurs in at least one cell. The terminal device identifies that quality of a signal received on first antenna panel information #c2 is greater than the link failure recovery threshold, or the terminal identifies that quality of a signal received on a first reference signal resource #b2 is greater than the link failure recovery threshold, or the terminal device identifies that quality of a signal on a first reference signal resource #b2 that is received based on first antenna panel information #c2 is greater than the link failure recovery threshold. The terminal device sends the second link failure recovery request message, where the second link failure recovery request message includes a cell identifier #x of an i^{th} cell in which a link failure occurs, the corresponding first reference signal #b2 for recovering the cell, and the first antenna panel information #c2. After receiving the second link failure recovery request message, the network device learns that antenna panel information identified by the terminal device and used to send an uplink signal of the i^{th} cell is the first antenna panel information #c2.

It should be noted that the first resource may be a resource of the PCell or a resource of the SCell, and the second resource for carrying the second link failure recovery request message may be a resource of the PCell or a resource of the SCell. For example, in the link failure recovery process in the case 2, the first resource for carrying the first link failure recovery request message may be a resource of the PCell, and the second resource for carrying the second link failure recovery request message may also be a resource of the PCell. When a link failure occurs in the SCell, the first resource may be the resource of the PCell, that is, the resource of the PCell is used to recover a link of the SCell. Alternatively, when the SCell has an uplink resource, the second resource for carrying the second link failure recovery request message is the resource of the SCell that has the uplink resource.

Based on the foregoing manner, the terminal device may explicitly report the first antenna panel information to the network device by using the second link failure recovery request message, so that the network device may learn of antenna panel information corresponding to the new link, to recover transmission of the uplink signal in time.

### Case 3

In another possible implementation, when the link failure recovery request message (BFRQ) is in a form of two messages and reported by the terminal device to the network device, that is, the link failure recovery request message includes a first link failure recovery request message and a second link failure recovery request message, the first link failure recovery request message indicates cell identifiers of the M cells in which the link failure occurs; and the second link failure recovery request message indicates the information about the N first reference signal resources used to recover the links of the M cells.

Optionally, the second link failure recovery request message includes the first antenna panel information.

Optionally, the first antenna panel information and the information about the first reference signal resource are simultaneously sent.

It should be understood that, in the case 2 and the case 3, the second link failure recovery request message may be MAC-CE information, or may be uplink control information reported at a layer 1 (for example, may be similar to UCI information reported by using CSI). Response information of the first link failure recovery request message may be DCI information. The information about the first reference signal may be an index of the first reference signal resource, and/or channel quality information (such as RSRP, a SINR, RSRQ, or a CQI) of the first reference signal resource. This is not limited in this application.

After determining that a link failure occurs, the terminal device sends the first link failure recovery request message to the network device, where the first link failure recovery request message indicates the cell identifiers of the M cells in which the link failure occurs. The terminal device identifies that quality of a signal received on first antenna panel information #c2 is greater than the link failure recovery threshold, or the terminal identifies that quality of a signal received on a first reference signal resource #b2 is greater than the link failure recovery threshold, or the terminal device identifies that quality of a signal on a first reference signal resource #b2 that is received based on first antenna panel information #c2 is greater than the link failure recovery threshold. The terminal device sends second request information, where the second request information includes the first antenna panel information #c2, and the corresponding first reference signal #b2 for recovering the i^{th} cell in the M cells. After receiving the second link failure recovery request message, the network device learns that antenna panel information identified by the terminal device and used to send an uplink signal of the i^{th} cell is the first antenna panel information #c2.

It should be understood that, in the case 2 and the case 3, the first resource for carrying the first link failure recovery request message may be a PRACH resource or a PUCCH resource. In the case 2 and the case 3, the second resource for carrying the second link failure recovery request message may be a PUSCH resource, a PRACH resource, or a PUCCH resource, and the first reference signal resource may be a CSI-RS resource, or the first reference signal resource may be an SSB resource. This is not limited in this application.

Optionally, the second resource may be indicated or activated by using the response information of the first link failure recovery request message.

Specifically, in a possible implementation, after receiving the first link failure recovery request message, the network device may further send the response information of the first link failure recovery request message. The response information of the first link failure recovery request message may be used to indicate the second resource allocated to the terminal. That is, the network device allocates a resource to the terminal. The second resource may be an aperiodic resource (or referred to as a dynamic resource). In this method, the network device determines, depending on whether there is a cell (indicated by using the first link failure recovery request message) in which a link failure occurs in a current network, whether to allocate the second resource. If the network device receives the first link failure recovery request message, the network device can learn that there is a cell in which a link failure occurs in the current network, and the network device may dynamically allocate the second resource, so that the terminal device further reports cells in which a link failure occurs, and/or reports information (first reference signal information) of new links of the cells requiring link failure recovery. Because a link failure event is an unexpected event, in this method, a periodic resource for sending link failure recovery request message does not need to be reserved in advance, so that resource overheads can be effectively reduced.

In another implementation, the response information of the first link failure recovery request message may be further used to activate a second resource, that is, the second resource originally allocated to the terminal device, and activation is triggered by using the response information of the first link failure recovery request message. The active second resource is a semi-persistent (semi-persistent) resource or a static (periodic) resource. For example, the second resource may be a semi-static resource or a static resource (for example, a physical uplink shared channel (physical uplink shared channel, PUSCH), a physical uplink control channel (physical uplink control channel, PUCCH) or a physical random access channel (physical random access channel, PRACH)) activated by using the response information of the first link failure recovery request message after the first link failure recovery request message or downlink control information (downlink control information, DCI) signaling after the first link failure recovery request message. In this method, the network device determines, depending on whether there is a cell (indicated by using the first link failure recovery request message) in which a link failure occurs in a current network, whether to activate the second resource. If the network device receives the first link failure recovery request message, the network device can learn that there is a cell in which a link failure occurs in the current network, and the network device activates the second resource, so that the terminal device further reports cells in which a link failure occurs, and/or reports information (first reference signal information) of new links of the cells requiring link failure recovery.

Optionally, the second resource may be configured by using higher layer signaling or system information, or may be a preset resource.

Specifically, the second resource may be configured by the network device for the terminal, and sent to the terminal by using the higher layer signaling or the system information. Alternatively, the second resource may be agreed on by the network device and the terminal device in advance, or may be set by the terminal in advance. This is not limited in this application.

Optionally, the second resource may alternatively be a resource having an association relationship with the first resource.

Specifically, there may be a mapping relationship between the second resource and the first resource. In this way, when learning of the first resource, the terminal may determine the second resource. Optionally, the association relationship between the first resource and the second resource may be configured by using system information such as a master information block (master information block, MIB) or a system information block (system information block, SIB), or configured by using radio resource control (radio resource control, RRC) signaling or media access control (media access control, MAC)-control element (control element, CE) signaling. The system information or the signaling may be sent before the first link failure recovery request message is sent. Optionally, the first resource and the second resource may alternatively be configured by using the foregoing system information or signaling. In the foregoing method, the second link failure recovery request message may no longer be sent by using the resource that is allocated by using the response information of the first link failure recovery request message, but may be directly sent on the second resource. This can effectively reduce a link recovery delay, and increase a link recovery speed.

It should be noted that the network device may configure a plurality of resources for the terminal to transmit the first link failure recovery request message, and configure a plurality of resources for the terminal to transmit the second link failure recovery request message. The terminal device may select one or more resources from the plurality of resources used to transmit the first link failure recovery request message, as the first resource, and may further select one or more resources from the plurality of resources used to transmit the second link failure recovery request message, as the second resource. The plurality of resources used to transmit the first link failure recovery request message and the plurality of resources used to transmit the second link failure recovery request message may be separately configured by using the system information such as the MIB or the SIB, or configured by using signaling such as the RRC signaling or the MAC-CE signaling.

Optionally, the second resource may alternatively be a resource associated with the first link failure recovery request message. Optionally, the network device may configure, by using the system information such as the MIB or the SIB, or by using the RRC signaling or the MAC-CE signaling, a plurality of resources used to send the first link failure recovery request message, a plurality of resources used to send the second link failure recovery request message, and an association relationship between the plurality of resources used to send the first link failure recovery request message and the plurality of resources used to send the second link failure recovery request message. The terminal may select one resource from the plurality of resources used to transmit the first link failure recovery request message, as the first resource, and may further select one resource from the plurality of resources used to transmit the second link failure recovery request message, as the second resource. Each first resource may be associated with one or more second resources, and sizes of the second resources associated with all the first resources may be different. The terminal device sends the second link failure recovery request message on a second resource associated with a first resource on which the terminal device sends the first link failure recovery request message.

It should be noted that the first resource may be a resource of the PCell or a resource of the SCell, and the second resource for carrying the second link failure recovery request message may be a resource of the PCell or a resource of the SCell. For example, in the link failure recovery process in the case 4, the first resource for carrying the first link failure recovery request message may be a resource of the PCell, and the second resource for carrying the second link failure recovery request message may also be a resource of the PCell. When a link failure occurs in the SCell, the first resource may be the resource of the PCell, that is, the resource of the PCell is used to recover a link of the SCell. Alternatively, when the SCell has an uplink resource, the second resource for carrying the second link failure recovery request message is the resource of the SCell that has the uplink resource.

Based on the foregoing manner, the terminal device may explicitly report the first antenna panel information to the network device by using the second link failure recovery request message, so that the network device may learn of antenna panel information corresponding to the new link, to recover transmission of the uplink signal in time.

It should be understood that, the antenna panel information may be reported by using a bitmap. For example, the antenna panel information set includes antenna panel information #1, antenna panel information #2, antenna panel information #3, and antenna panel information #4. When the terminal device identifies that the antenna panel information #1 and the antenna panel information #3 are available, the terminal device may feed back "1010", where each bit in the bitmap fed back by the terminal device corresponds to one piece of antenna panel information, "1" indicates that antenna panel information corresponding to the bit is available (or referred to as active), and "0" indicates that antenna panel information corresponding to the bit is unavailable (or referred to as inactive).

306: The network device determines a first antenna panel.

Specifically, in 305, the terminal device may report the first antenna panel information to the network device by using an explicit indication method or an implicit indication method, and the network device may determine the first antenna panel information.

In a possible implementation, the network device may determine the first antenna panel information based on the first mapping relationship and the first resource.

Alternatively, the network device may determine the first antenna panel information based on the first mapping relationship and the first reference signal resource.

Alternatively, the network device may obtain the first antenna panel information based on the link failure recovery request message or the second link failure recovery request message carried by the terminal device.

307: The network device sends a link failure recovery response message to the terminal device, and correspondingly, the terminal device receives the link failure recovery response message sent by the network device.

It should be understood that, optionally, the terminal device detects the link failure recovery response message (BFRR) based on the link failure recovery request message (BFRQ) in step 305. If the terminal device detects the BFRR, it is considered that the link failure recovery succeeds. If the terminal device detects no BFRR, the terminal device may perform the process of step 305 again until the link failure recovery succeeds.

It should be further understood that, optionally, in a process in which the terminal device may perform steps 305 again, monitoring may be performed by using the link failure recovery timer (beam failure recovery timer) and the link failure recovery counter (beam failure recovery counter). Specifically, when a quantity of times that the terminal device sends the link failure recovery request is greater than or equal to a maximum value of the link failure recovery counter, or a time length for link failure recovery exceeds preset duration, it is considered that the link failure recovery fails.

It should be further understood that, the link failure recovery response message sent by the network device to the terminal device may indicate a new available link on which the terminal device can perform link recovery and antenna panel information for sending the uplink signal.

For example, the terminal device reports eight first reference signal resources associated with three first antenna panels to the network device in the BFRQ. The network device indicates one piece of antenna panel information to the terminal device in the BFRR. In this case, the terminal device may send an uplink signal based on the one piece of antenna panel information.

Alternatively, the network device indicates two pieces of antenna panel information to the terminal device in the BFRR, and the terminal device may send uplink signals in sequence according to different time sequences. For example, an uplink signal is first sent by using an antenna panel #1, and then an uplink signal is sent by using an antenna panel #2. Alternatively, uplink signals may be sent by using two pieces of antenna panel information at the same time. This is not limited in this application.

It should be noted that, in the embodiments of this application, the "cell identifier" may alternatively be replaced with a "cell index". Reference signal information may include a reference signal index/an index of an SSB and/or reference signal quality/quality of the SSB.

308: The terminal device sends an uplink signal to the network device based on the first antenna panel information, and correspondingly, the network device receives the uplink signal based on the first antenna panel information.

In a possible implementation, after K time units after the link failure recovery response message is received, the terminal device sends the uplink signal based on the first antenna panel information, where K≥0, and K is an integer.

It should be understood that, a moment at which the terminal device sends the uplink signal herein may be a time unit after K time units after the terminal device receives the link recovery response message; or may be a K^{th} time unit in which the terminal device receives the link recovery response message, where for example, the terminal device receives the link failure recovery response message and sends the uplink signal on different symbols in a same time unit; or may be a time unit the same as that in which the terminal device receives the link recovery response message. This is not limited in this application.

For example, K may be a preset value. When the terminal device receives the link failure recovery response message in a time unit # 1 and K=4, the terminal device may send the uplink signal in a slot represented by a time unit # 5. Alternatively, the terminal device may send the uplink signal in a slot (for example, a time unit #6) after the time unit # 5. Alternatively, K=0, and the terminal device may send the uplink signal in a slot represented by the time unit #1, for example, a symbol or a time-frequency resource that is in the slot and that is different from that on which the link failure recovery response message is received.

It should be further understood that, "starting to send the uplink signal" may be understood as that the uplink signal may be sent based on the first antenna panel information in the time unit and a time period starting from the time unit.

In another possible implementation, the terminal device determines a power control parameter based on the first antenna panel information; and sends the uplink signal based on the power control parameter.

It should be understood that, the power control parameter herein may be P0 or alpha.

In some optional embodiments, the power control parameter may include one or more of the following: target received power of the uplink signal, a path loss compensation factor, and a path loss reference signal. The target received power P0 is lowest signal strength at which the network device can demodulate the uplink signal, or is received power at which the network device expects to receive the uplink signal. The path loss compensation factor alpha/α is used by the network device to determine a weight of a path loss in uplink power control. The path loss reference signal pathloss RS means that the terminal estimates a downlink path loss (PL) based on strength of a received reference signal for estimating a path loss and considers that an uplink path loss is equivalent to the downlink path loss. Optionally, for an SRS or a PUSCH, the power control parameter may include the target received power of the uplink signal, the path loss compensation factor, and the path loss reference signal. Optionally, for a PUCCH, the power control parameter may include the path loss reference signal and the target received power of the uplink signal.

In some optional embodiments, the configuration information sent by the network device to the terminal may indicate a mapping relationship between the antenna panel information and the power control parameter.

Optionally, in this application, the uplink signal includes at least one of a physical uplink control channel PUCCH, a physical uplink shared channel PUSCH, a sounding reference signal SRS, or a demodulation reference signal DMRS. This is not limited in this application.

It should be understood that, a process in which the terminal device reports the antenna panel information may include all or some of the steps described above. This is not limited in this application. For example, a communications system may not perform 303. Alternatively, another intermediate step is not performed, or a subsequent step may not be performed. According to the foregoing technical solution, when a link between a terminal device and a network device fails, and the terminal device requests the network device to recover the link, information about an antenna panel for sending an uplink signal is indicated by using a link failure recovery request message. For example, the terminal device may indicate, in an explicit or implicit manner, information (a panel ID) about an antenna panel corresponding to a new link for sending the uplink signal. Specifically, the implicit manner may be as follows: The terminal device implicitly reports first antenna panel information to the network device by using an association relationship that is between a first reference signal resource and a first antenna panel and that is included in the link failure recovery request message, or an association relationship between a first resource for carrying the link failure recovery request message and a first antenna panel. In this way, the network device may learn of the antenna panel information corresponding to the new link, to recover transmission of the uplink signal in time. Alternatively, in the explicit manner, the terminal device directly includes first antenna panel information (for example, an identifier of a first antenna panel) in the link failure recovery request message and sends the link failure recovery request message to the network device. The terminal device may send the uplink signal based on the antenna panel information, or the network device may obtain the antenna panel information, to recover transmission of the uplink signal in time, thereby improving link recovery reliability.

It should be further understood that, in the descriptions of the embodiments of this application, meanings of a mapping relationship, a correspondence, and an association relationship are the same or similar.

It should be understood that, in this application, the "cell identifier" may be replaced with a "cell group identifier".

It should be further understood that, in an application scenario, in this application, the antenna panel information reported in the link failure recovery request message may be used to notify the network device of antenna panel information that is of the terminal device and that is currently available for link recovery, so that the network device may receive the uplink signal or send a downlink signal based on the information.

In another application scenario, in this application, the antenna panel information reported in the link failure recovery request message may be further used to notify the network device of information about a currently active or available antenna panel of the terminal device, so that the network device may receive the uplink signal or send a downlink signal based on the information, or the network device indicates, based on the information, the antenna panel information for sending the uplink signal (indicate one or more pieces of antenna panel information in the information about the active antenna panel).

In another application scenario, in this application, the antenna panel information reported in the link failure recovery request message may be used by the terminal device to send the uplink signal or the network device to receive the uplink signal.

In another application scenario, the antenna panel information reported in the link failure recovery request message may be used by the terminal device to receive a downlink signal or the network device to send a downlink signal.

It should be further understood that, in this application, one or more (for example, W) pieces of antenna panel information may be reported in the link failure recovery request message.

It should be further understood that, in this application, a value relationship between M and W is not limited. There may also be a plurality of correspondences between the M cells in which the link failure occurs and the W pieces of antenna panel information that are reported in the link failure recovery request message. For example, one cell corresponds to one piece of antenna panel information; one cell corresponds to a plurality of pieces of antenna panel information; or one piece of antenna panel information corresponds to a plurality of cells. This is not limited in this application.

It should be further understood that, in this application, a value relationship between N and W is not limited. There may also be a correspondence between the information about the N reference signal resources and the W pieces of antenna panel information that are reported by the terminal device in the link failure recovery request message. For example, one piece of reference signal resource information corresponds to one piece of antenna panel information; one piece of reference signal resource information corresponds to a plurality of pieces of antenna panel information; or one piece of antenna panel information corresponds to a plurality of pieces of reference signal resource information. This is not limited in this application.

It should be further understood that, in this embodiment of this application, the "identifier" may alternatively be replaced with an "index".

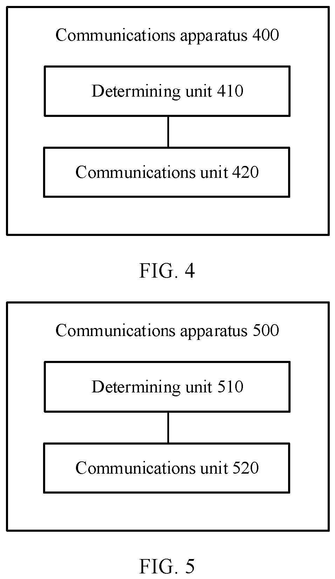

The foregoing describes in detail the link failure recovery method in the embodiments of this application with reference to FIG. 3. The following describes in detail link failure recovery apparatuses in the embodiments of this application with reference to FIG. 4 to FIG. 7.

FIG. 4 is a schematic block diagram of a link failure recovery apparatus 400 according to an embodiment of this application. The apparatus 400 may correspond to the terminal device described in the method 300, or may be a chip or a component used in the terminal device. In addition, modules or units in the apparatus 400 are respectively configured to perform actions or processing processes performed by the terminal device in the method 300. As shown in FIG. 4, the communications apparatus 400 may include a determining unit 410 and a communications unit 420.

The determining unit 410 is configured to determine first antenna panel information.

The communications unit 420 is configured to send a link failure recovery request message, where the link failure recovery request message indicates the first antenna panel information.

The communications unit 420 is further configured to send an uplink signal based on the first antenna panel information.

In a possible implementation, the communications unit is further configured to receive configuration information, where the configuration information is used to indicate a first mapping relationship, where the first mapping relationship is used to indicate a correspondence between a first resource set and an antenna panel information set, the first resource set includes at least one first resource, the first resource is used to send the link failure recovery request message or the first link failure recovery request message, and the antenna panel information set includes at least one piece of first antenna panel information; and/or
the first mapping relationship is used to indicate a correspondence between a first reference signal resource set and an antenna panel information set, the first reference signal resource set includes at least one first reference signal resource, and the antenna panel information set includes at least one piece of first antenna panel information.

In a possible implementation, the determining unit 410 is further configured to: determine the first resource based on the first mapping relationship and the first antenna panel information; and/or determine the first reference signal resource based on the first mapping relationship and the first antenna panel information.

In a possible implementation, the communications unit 420 is further configured to: after K time units after the link failure recovery response message is received, send the uplink signal based on the first antenna panel information, where K≥0, and K is an integer.

In a possible implementation, the determining unit 410 is further configured to determine a power control parameter based on the first antenna panel information; and the communications unit 420 is further configured to send the uplink signal based on the power control parameter.

Specifically, the determining unit 410 is configured to perform 302, 303, and 304 in the method 300, and the communications unit 420 is configured to perform 301, 305, 307, and 308 in the method 300. A specific process in which each unit performs the foregoing corresponding step has been described in detail in the method 400. For brevity, Details are not described herein again.

FIG. 5 is a schematic block diagram of a link failure recovery apparatus 500 according to an embodiment of this application. The apparatus 500 may correspond to (for example, may be applied to or may be) the base station described in the method 300. In addition, modules or units in the apparatus 500 are respectively configured to perform actions or processing processes performed by the base station in the method 300. As shown in FIG. 5, the communications apparatus 500 may include a determining unit 510 and a communications unit 520.

The communications unit 520 is configured to receive a link failure recovery request message, where the link failure recovery request message indicates first antenna panel information.

The determining unit 510 is configured to determine first antenna panel information.

The communications unit 520 is further configured to receive an uplink signal based on the first antenna panel information.

In a possible implementation, the communications unit 520 is further configured to send configuration information, where the configuration information is used to configure a first mapping relationship, where the first mapping relationship is used to indicate a correspondence between a first resource set and an antenna panel information set, the first resource set includes at least one first resource, the first resource is used to send the link failure recovery request message or the first link failure recovery request message, and the antenna panel information set includes at least one piece of first antenna panel information; and/or the first mapping relationship is used to indicate a correspondence between a first reference signal resource set and an antenna panel information set, the first reference signal resource set includes at least one first reference signal resource, and the antenna panel information set includes at least one piece of first antenna panel information.

In a possible implementation, the determining unit 510 is further configured to: determine the first antenna panel information based on the first mapping relationship and the first resource; and/or determine the first antenna panel information based on the first mapping relationship and the first reference signal resource.

In a possible implementation, the communications unit 520 is further configured to: after K time units after the link failure recovery response message is sent, receive the uplink signal based on the first antenna panel information, where K≥0, and K is an integer.

In a possible implementation, the determining unit 510 is further configured to determine a power control parameter based on the first antenna panel information; and the communications unit 520 is further configured to receive the uplink signal based on the power control parameter.

The determining unit 510 is configured to perform 306 in the method 300, and the communications unit 520 is configured to perform 301, 305, 307, and 308 in the method 300. A specific process in which each unit performs the foregoing corresponding step has been described in detail in the method 300 and the method 400. For brevity, Details are not described herein again.

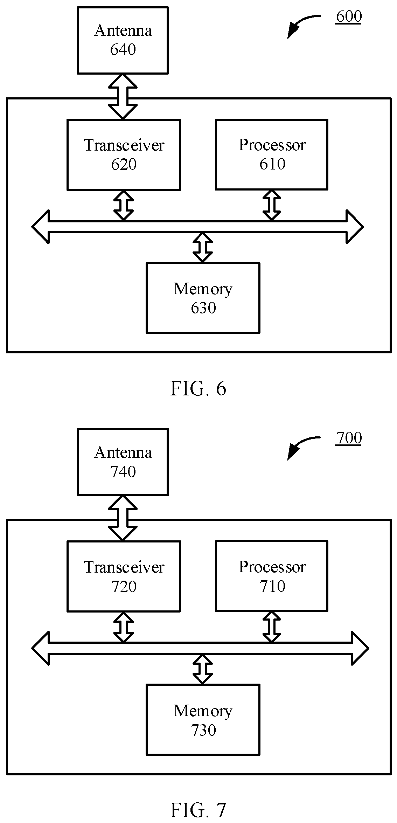

FIG. 6 is a schematic diagram of a structure of a terminal device 600 according to an embodiment of this application. As shown in FIG. 6, the terminal device 600 includes a processor 610 and a transceiver 620. Optionally, the terminal device 600 further includes a memory 630. The processor 610, the transceiver 620, and the memory 630 communicate with each other through an internal connection path, and transfer a control signal and/or a data signal. The memory 630 is configured to store a computer program. The processor 610 is configured to invoke the computer program from the memory 630 and run the computer program, to control the transceiver 620 to receive and send a signal.

The processor 610 and the memory 630 may be integrated into one processing apparatus. The processor 610 is configured to execute program code stored in the memory 630 to implement the function of the terminal device in the foregoing method embodiments. During specific implementation, the memory 630 may alternatively be integrated into the processor 610, or may be independent of the processor 610. The transceiver 620 may be implemented by using a transceiver circuit.

The terminal device may further include an antenna 640, configured to send, by using a radio signal, uplink data or uplink control signaling output by the transceiver 620, or send, after receiving downlink data or downlink control signaling, the downlink data or the downlink control signaling to the transceiver 620 for further processing.

It should be understood that, the apparatus 600 may correspond to the terminal device in the method 300 according to the embodiments of this application, and the apparatus 600 may alternatively be a chip or a component used in the terminal device. In addition, modules in the apparatus 600 implement corresponding procedures in the method 300 in FIG. 3. Specifically, the memory 630 is configured to store program code, so that when the processor 610 executes the program code, the processor 610 is controlled to perform 302, 303, and 304 in the method 300. The transceiver 620 is configured to perform 301, 305, 307, and 308 in the method 300. A specific process in which each unit performs the foregoing corresponding step has been described in detail in the method 300. For brevity, details are not described herein again.

FIG. 7 is a schematic diagram of a structure of a network device 700 according to an embodiment of this application. As shown in FIG. 7, the network device 700 (for example, a base station) includes a processor 710 and a transceiver 720. Optionally, the network device 700 further includes a memory 730. The processor 710, the transceiver 720, and the memory 730 communicate with each other through an internal connection path, and transfer a control signal and/or a data signal. The memory 730 is configured to store a computer program. The processor 710 is configured to invoke the computer program from the memory 730 and run the computer program, to control the transceiver 720 to receive and send a signal.

The processor 710 and the memory 730 may be integrated into one processing apparatus. The processor 710 is configured to execute program code stored in the memory 730 to implement the function of the base station in the foregoing method embodiments. During specific implementation, the memory 730 may alternatively be integrated into the processor 710, or may be independent of the processor 710. The transceiver 720 may be implemented by a transceiver circuit.

The network device may further include an antenna 740, configured to send, by using a radio signal, downlink data or downlink control signaling output by the transceiver 720, or send, after receiving uplink data or uplink control signaling, the uplink data or the uplink control signaling to the transceiver 720 for further processing.

It should be understood that, the apparatus 700 may correspond to the base station in the method 300 according to the embodiments of this application, and the apparatus 700 may alternatively be a chip or a component used in the base station. In addition, modules in the apparatus 700 implement corresponding procedures in the method 300 in FIG. 3. Specifically, the memory 730 is configured to store program code, so that when the processor 710 executes the program code, the processor 710 is controlled to perform 306 in the method 300. The transceiver 720 is configured to perform 301, 305, 307, and 308 in the method 300. A specific process in which each unit performs the foregoing corresponding step has been described in detail in the method 300. For brevity, details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. Division into the units is merely logical function division and may be other division during actual implementation. For example, a plurality of units or components may be combined. In addition, the displayed or discussed mutual couplings or communication connections may be indirect couplings or communication connections through some interfaces, apparatuses, or units.

In addition, functional units in the embodiments of this application may be integrated into one physical entity, or each of the units corresponds to one physical entity, or two or more units are integrated into one physical entity.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

## Claims

1. A communication method performed by a terminal device, the method comprising the steps of:
**a.)** receiving (301) configuration information from a network device,
wherein the configuration information configures a first mapping relationship, wherein the first mapping relationship indicates a correspondence between a first resource set and an antenna panel information set,
wherein the first resource set comprises at least one first resource and
the antenna panel information set includes at least one piece of antenna panel information configured to indicate an antenna panel,
**b.)** determining (302) that a current link to the network device fails;
**c.)** identifying (303) a new link to the network device;
**d.)** determining (304) a first antenna panel for sending an uplink signal to the network device on the new link;
**e.)** determining, based on the received first mapping relationship and based on the determined first antenna panel, a first resource of the first resource set;
**f.)** sending (305), to the network device, a link failure recovery request message on the determined first resource, so that the link failure recovery request message indicates by its transmission on the determined first resource the determined first antenna panel that will be used for transmitting the uplink signal to the network device on the new link;
**g.)** receiving (307) a link failure recovery response message from the network device, the reception of the link failure recovery response message indicating that link failure recovery was successful, and
**h.)** sending (308), to the network device, the uplink signal by using the determined first antenna panel on the new link.

2. The method according to claim 1, wherein the link failure recovery request message indicates cell identifiers of M cells in which a link failure occurs and/or information about N first reference signal resources used to recover links of the M cells, M≥1, N≥1, and M and N are integers.

3. The method according to claim 1 or 2, wherein the link failure recovery request message comprises a first link failure recovery request message and a second link failure recovery request message;
the first link failure recovery request message indicates that a link failure occurs in at least one cell; and
the second link failure recovery request message indicates the cell identifiers of the M cells in which the link failure occurs and/or the information about the N first reference signal resources used to recover the links of the M cells, M≥1, N≥1, and M and N are integers.

4. The method according to claim 1 or 2, wherein the link failure recovery request message comprises a first link failure recovery request message and a second link failure recovery request message;
the first link failure recovery request message indicates the cell identifiers of the M cells in which the link failure occurs; and
the second link failure recovery request message indicates the information about the N first reference signal resources used to recover the links of the M cells, M≥1, N≥1, and M and N are integers.

5. A communication method performed by a network device, the method comprising the steps of:
**a.)** sending (301) configuration information to a terminal device,
wherein the configuration information configures a first mapping relationship, wherein the first mapping relationship indicates a correspondence between a first resource set and an antenna panel information set,
wherein the first resource set comprises at least one first resource and the antenna panel information set includes at least one piece of antenna panel information configured to indicate an antenna panel,
**b.)** receiving (305), from the terminal device, a link failure recovery request message on a first resource of the first resource set;
**c.)** determining (306), based on the configuration information and based on the first resource on which the link failure recovery request message is received, a first antenna panel among the at least one antenna panel that the terminal device will use for sending an uplink signal to the network device;
**d.)** sending (307) a link failure recovery response message to the terminal device, the transmission of the link failure recovery response message indicating that link failure recovery was successful, and
**e.)** receiving (308) the uplink signal by using information of the determined first antenna panel that is used by the terminal device to send the uplink signal to the network device.

6. The method according to claim 5, wherein the link failure recovery request message indicates cell identifiers of M cells in which a link failure occurs and/or information about N first reference signal resources used to recover links of the M cells, M≥1, N≥1, and M and N are integers.

7. The method according to claim 5 or 6, wherein the link failure recovery request message comprises a first link failure recovery request message and a second link failure recovery request message;
the first link failure recovery request message indicates that a link failure occurs in at least one cell; and
the second link failure recovery request message indicates the cell identifiers of the M cells in which the link failure occurs and/or the information about the N first reference signal resources used to recover the links of the M cells, M≥1, N≥1, and M and N are integers.

8. The method according to claim 5 or 6, wherein the link failure recovery request message comprises a first link failure recovery request message and a second link failure recovery request message;
the first link failure recovery request message indicates the cell identifiers of the M cells in which the link failure occurs; and
the second link failure recovery request message indicates the information about the N first reference signal resources used to recover the links of the M cells, M≥1, N≥1, and M and N are integers.

9. A terminal device configured to perform the method according to any one of claims 1 to 4.

10. A network device configured to perform the method according to any one of claims 5 to 8.

11. A computer program comprising instructions, which, when the program is executed by a terminal device, cause the terminal device to carry out the method according to any one of the claims 1 to 4.

12. A computer program comprising instructions, which, when the program is executed by a network device, cause the network device to carry out the method according to any one of the claims 5 to 8.

## Patentansprüche

1. Kommunikationsverfahren, das von einem Endgerät durchgeführt wird, wobei das Verfahren die folgenden Schritte umfasst:
**a.)** Empfangen (301) von Konfigurationsinformationen von einem Netzwerkgerät, wobei die Konfigurationsinformationen eine erste Zuordnungsbeziehung konfigurieren, wobei die erste Zuordnungsbeziehung eine Entsprechung zwischen einem ersten Ressourcensatz und einem Antennenfeld-Informationssatz angibt,
wobei der erste Ressourcensatz mindestens eine erste Ressource umfasst und
der Antennenfeld-Informationssatz mindestens eine Antennenfeld-Information beinhaltet, die dazu konfiguriert ist, ein Antennenfeld anzugeben,
**b.)** Bestimmen (302), dass eine aktuelle Verbindung zu dem Netzwerkgerät fehlschlägt;
**c.)** Feststellen (303) einer neuen Verbindung zu dem Netzwerkgerät;
**d.)** Bestimmen (304) eines ersten Antennenfeldes zum Senden eines Uplink-Signals an das Netzwerkgerät über die neue Verbindung;
**e.)** Bestimmen einer ersten Ressource des ersten Ressourcensatzes basierend auf der empfangenen ersten Zuordnungsbeziehung und basierend auf dem bestimmten ersten Antennenfeld;
**f.)** Senden (305) einer Anforderungsnachricht zur Wiederherstellung bei einem Verbindungsfehler auf der bestimmten ersten Ressource an das Netzwerkgerät, sodass die Anforderungsnachricht zur Wiederherstellung bei einem Verbindungsfehler durch ihre Übertragung auf der bestimmten ersten Ressource das bestimmte erste Antennenfeld angibt, das zum Übertragen des Uplink-Signals über die neue Verbindung an das Netzwerkgerät verwendet wird;
**g.)** Empfangen (307) einer Antwortnachricht zur Wiederherstellung bei einem Verbindungsfehler von dem Netzwerkgerät, wobei der Empfang der Antwortnachricht zur Wiederherstellung bei einem Verbindungsfehler angibt, dass die Wiederherstellung bei einem Verbindungsfehler erfolgreich war, und
**h.)** Senden (308) des Uplink-Signals an das Netzwerkgerät unter Verwendung des bestimmten ersten Antennenfeldes über die neue Verbindung.

2. Verfahren gemäß Anspruch 1, wobei die Anforderungsnachricht zur Wiederherstellung bei einem Verbindungsfehler Zellbezeichner von M Zellen, in denen ein Verbindungsfehler auftritt, und/oder Informationen über N erste Referenzsignalressourcen angibt, die zur Wiederherstellung von Verbindungen der M Zellen verwendet werden, wobei M≥1, N≥1, und M und N ganze Zahlen sind.

3. Verfahren gemäß Anspruch 1 oder 2, wobei die Anforderungsnachricht zur Wiederherstellung bei einem Verbindungsfehler eine erste Anforderungsnachricht zur Wiederherstellung bei einem Verbindungsfehler und eine zweite Anforderungsnachricht zur Wiederherstellung bei einem Verbindungsfehler umfasst;
die erste Anforderungsnachricht zur Wiederherstellung bei einem Verbindungsfehler angibt, dass ein Verbindungsfehler in mindestens einer Zelle auftritt; und
die zweite Anforderungsnachricht zur Wiederherstellung bei einem Verbindungsfehler die Zellbezeichner der M Zellen, in denen der Verbindungsfehler auftritt, und/oder die Informationen über die N ersten Referenzsignalressourcen angibt, die zur Wiederherstellung der Verbindungen der M Zellen verwendet werden, wobei M≥1, N≥1, und M und N ganze Zahlen sind.

4. Verfahren gemäß Anspruch 1 oder 2, wobei die Anforderungsnachricht zur Wiederherstellung bei einem Verbindungsfehler eine erste Anforderungsnachricht zur Wiederherstellung bei einem Verbindungsfehler und eine zweite Anforderungsnachricht zur Wiederherstellung bei einem Verbindungsfehler umfasst;
die erste Anforderungsnachricht zur Wiederherstellung bei einem Verbindungsfehler die Zellbezeichner der M Zellen angibt, in denen der Verbindungsfehler auftritt; und
die zweite Anforderungsnachricht zur Wiederherstellung bei einem Verbindungsfehler die Informationen über die N ersten Referenzsignalressourcen angibt, die zur Wiederherstellung der Verbindungen der M Zellen verwendet werden, wobei M≥1, N≥1, und M und N ganze Zahlen sind.

5. Kommunikationsverfahren, das von einem Netzwerkgerät durchgeführt wird, wobei das Verfahren die folgenden Schritte umfasst:
**a.)** Senden (301) von Konfigurationsinformationen an ein Netzwerkgerät, wobei die Konfigurationsinformationen eine erste Zuordnungsbeziehung konfigurieren, wobei die erste Zuordnungsbeziehung eine Entsprechung zwischen einem ersten Ressourcensatz und einem Antennenfeld-Informationssatz angibt,
wobei der erste Ressourcensatz mindestens eine erste Ressource umfasst und
der Antennenfeld-Informationssatz mindestens eine Antennenfeld-Information beinhaltet, die dazu konfiguriert ist, ein Antennenfeld anzugeben,
**b.)** Empfangen (305) einer Anforderungsnachricht zur Wiederherstellung bei einem Verbindungsfehler von dem Endgerät auf einer ersten Ressource des ersten Ressourcensatzes;
**c.)** Bestimmen (306) eines ersten Antennenfeldes unter den mindestens einen Antennenfeldern, die das Endgerät zum Senden eines Uplink-Signals an das Netzwerkgerät verwenden wird, basierend auf den Konfigurationsinformationen und basierend auf der ersten Ressource, auf der die Anforderungsnachricht zur Wiederherstellung bei einem Verbindungsfehler empfangen wird;
**d.)** Senden (307) einer Antwortnachricht zur Wiederherstellung bei einem Verbindungsfehler an das Endgerät, wobei die Übertragung der Antwortnachricht zur Wiederherstellung bei einem Verbindungsfehler angibt, dass die Wiederherstellung bei einem Verbindungsfehler erfolgreich war, und
**e.)** Empfangen (308) des Uplink-Signals unter Verwendung von Informationen des bestimmten ersten Antennenfeldes, das durch das Endgerät dazu verwendet wird, das Uplink-Signal an das Netzwerkgerät zu senden.

6. Verfahren gemäß Anspruch 5, wobei die Anforderungsnachricht zur Wiederherstellung bei einem Verbindungsfehler Zellbezeichner von M Zellen, in denen ein Verbindungsfehler auftritt, und/oder Informationen über N erste Referenzsignalressourcen angibt, die zur Wiederherstellung von Verbindungen der M Zellen verwendet werden, wobei M≥1, N≥1, und M und N ganze Zahlen sind.

7. Verfahren gemäß Anspruch 5 oder 6, wobei die Anforderungsnachricht zur Wiederherstellung bei einem Verbindungsfehler eine erste Anforderungsnachricht zur Wiederherstellung bei einem Verbindungsfehler und eine zweite Anforderungsnachricht zur Wiederherstellung bei einem Verbindungsfehler umfasst;
die erste Anforderungsnachricht zur Wiederherstellung bei einem Verbindungsfehler angibt, dass ein Verbindungsfehler in mindestens einer Zelle auftritt; und
die zweite Anforderungsnachricht zur Wiederherstellung bei einem Verbindungsfehler die Zellbezeichner der M Zellen, in denen der Verbindungsfehler auftritt, und/oder die Informationen über die N ersten Referenzsignalressourcen angibt, die zur Wiederherstellung der Verbindungen der M Zellen verwendet werden, wobei M≥1, N≥1, und M und N ganze Zahlen sind.

8. Verfahren gemäß Anspruch 5 oder 6, wobei die Anforderungsnachricht zur Wiederherstellung bei einem Verbindungsfehler eine erste Anforderungsnachricht zur Wiederherstellung bei einem Verbindungsfehler und eine zweite Anforderungsnachricht zur Wiederherstellung bei einem Verbindungsfehler umfasst;
die erste Anforderungsnachricht zur Wiederherstellung bei einem Verbindungsfehler die Zellbezeichner der M Zellen angibt, in denen der Verbindungsfehler auftritt; und
die zweite Anforderungsnachricht zur Wiederherstellung bei einem Verbindungsfehler die Informationen über die N ersten Referenzsignalressourcen angibt, die zur Wiederherstellung der Verbindungen der M Zellen verwendet werden, wobei M≥1, N≥1, und M und N ganze Zahlen sind.

9. Endgerät, das dazu konfiguriert ist, das Verfahren gemäß einem der Ansprüche 1 bis 4 durchzuführen.

10. Netzwerkgerät, das dazu konfiguriert ist, das Verfahren gemäß einem der Ansprüche 5 bis 8 durchzuführen.

11. Computerprogramm, das Anweisungen umfasst, die, wenn das Programm durch ein Endgerät ausgeführt wird, das Endgerät veranlassen, das Verfahren gemäß einem der Ansprüche 1 bis 4 durchzuführen.

12. Computerprogramm, das Anweisungen umfasst, die, wenn das Programm durch ein Netzwerkgerät ausgeführt wird, das Netzwerkgerät veranlassen, das Verfahren gemäß einem der Ansprüche 5 bis 8 durchzuführen.

## Revendications

1. Procédé de communication mis en œuvre par un dispositif terminal, le procédé comprenant les étapes :
**a.)** de réception (301) d'informations de configuration d'un dispositif réseau, dans lequel les informations de configuration configurent une première relation de mappage, dans lequel la première relation de mappage indique une correspondance entre un premier ensemble de ressources et un ensemble d'informations sur le panneau d'antenne,
dans lequel le premier ensemble de ressources comprend au moins une première ressource et
l'ensemble d'informations sur le panneau d'antenne comporte au moins une information sur le panneau d'antenne configurée pour indiquer un panneau d'antenne,
**b.)** de détermination (302) qu'une liaison actuelle au dispositif réseau est défaillante ;
**c.)** d'identification (303) d'une nouvelle liaison au dispositif réseau ;
**d.)** de détermination (304) d'un premier panneau d'antenne pour envoyer un signal de liaison montante au dispositif réseau sur la nouvelle liaison ;
**e.)** de détermination, sur la base de la première relation de mappage reçue et sur la base du premier panneau d'antenne déterminé, d'une première ressource du premier ensemble de ressources ;
**f.)** d'envoi (305), au dispositif réseau, d'un message de demande de récupération après défaillance de liaison sur la première ressource déterminée, de sorte que le message de demande de récupération après défaillance de liaison indique par sa transmission sur la première ressource déterminée le premier panneau d'antenne déterminé qui sera utilisé pour transmettre le signal de liaison montante au dispositif réseau sur la nouvelle liaison ;
**g.)** de réception (307) d'un message de réponse de récupération après défaillance de liaison en provenance du dispositif réseau, la réception du message de réponse de récupération après défaillance de liaison indiquant que la récupération après défaillance de liaison a réussi, et
**h.)** d'envoi (308), au dispositif réseau, du signal de liaison montante en utilisant le premier panneau d'antenne déterminé sur la nouvelle liaison.

2. Procédé selon la revendication 1, dans lequel le message de demande de récupération après défaillance de liaison indique des identifiants de cellules de M cellules dans lesquelles une défaillance de liaison se produit et/ou des informations sur N premières ressources de signal de référence utilisées pour récupérer les liaisons des M cellules, M≥1, N≥1, et M et N sont des entiers.

3. Procédé selon la revendication 1 ou 2, dans lequel le message de demande de récupération après défaillance de liaison comprend un premier message de demande de récupération après défaillance de liaison et un second message de demande de récupération après défaillance de liaison ;
le premier message de demande de récupération après défaillance de liaison indique qu'une défaillance de liaison se produit dans au moins une cellule ; et
le second message de demande de récupération après défaillance de liaison indique les identifiants de cellules des M cellules dans lesquelles la défaillance de liaison se produit et/ou les informations sur les N premières ressources de signal de référence utilisées pour récupérer les liaisons des M cellules, M≥1, N≥1, et M et N sont des entiers.

4. Procédé selon la revendication 1 ou 2, dans lequel le message de demande de récupération après défaillance de liaison comprend un premier message de demande de récupération après défaillance de liaison et un second message de demande de récupération après défaillance de liaison ;
le premier message de demande de récupération après défaillance de liaison indique les identifiants de cellule des M cellules dans lesquelles la défaillance de liaison se produit ; et
le second message de demande de récupération après défaillance de liaison indique les informations sur les N premières ressources de signal de référence utilisées pour récupérer les liaisons des M cellules, M≥1, N≥1, et M et N sont des entiers.

5. Procédé de communication mis en œuvre par un dispositif réseau, le procédé comprenant les étapes :
**a.)** d'envoi (301) d'informations de configuration à un dispositif terminal, dans lequel les informations de configuration configurent une première relation de mappage, dans lequel la première relation de mappage indique une correspondance entre un premier ensemble de ressources et un ensemble d'informations sur le panneau d'antenne,
dans lequel le premier ensemble de ressources comprend au moins une première ressource et
l'ensemble d'informations sur le panneau d'antenne comporte au moins une information sur le panneau d'antenne configurée pour indiquer un panneau d'antenne,
**b.)** de réception (305), en provenance du dispositif terminal, d'un message de demande de récupération après défaillance de liaison sur une première ressource du premier ensemble de ressources ;
**c.)** de détermination (306), sur la base des informations de configuration et sur la base de la première ressource sur laquelle le message de demande de récupération après défaillance de liaison est reçu, d'un premier panneau d'antenne parmi l'au moins un panneau d'antenne que le dispositif terminal utilisera pour envoyer un signal de liaison montante au dispositif réseau ;
**d.)** d'envoi (307) d'un message de réponse de récupération après défaillance de liaison au dispositif terminal, la transmission du message de réponse de récupération après défaillance de liaison indiquant que la récupération après défaillance de liaison a réussi, et
**e.)** de réception (308) du signal de liaison montante à l'aide d'informations du premier panneau d'antenne déterminé qui est utilisé par le dispositif terminal pour envoyer le signal de liaison montante au dispositif réseau.

6. Procédé selon la revendication 5, dans lequel le message de demande de récupération après défaillance de liaison indique des identifiants de cellules de M cellules dans lesquelles une défaillance de liaison se produit et/ou des informations sur N premières ressources de signal de référence utilisées pour récupérer les liaisons des M cellules, M≥1, N≥1, et M et N sont des entiers.

7. Procédé selon la revendication 5 ou 6, dans lequel le message de demande de récupération après défaillance de liaison comprend un premier message de demande de récupération après défaillance de liaison et un second message de demande de récupération après défaillance de liaison ;
le premier message de demande de récupération après défaillance de liaison indique qu'une défaillance de liaison se produit dans au moins une cellule ; et
le second message de demande de récupération après défaillance de liaison indique les identifiants de cellules des M cellules dans lesquelles la défaillance de liaison se produit et/ou les informations sur les N premières ressources de signal de référence utilisées pour récupérer les liaisons des M cellules, M≥1, N≥1, et M et N sont des entiers.

8. Procédé selon la revendication 5 ou 6, dans lequel le message de demande de récupération après défaillance de liaison comprend un premier message de demande de récupération après défaillance de liaison et un second message de demande de récupération après défaillance de liaison ;
le premier message de demande de récupération après défaillance de liaison indique les identifiants de cellule des M cellules dans lesquelles la défaillance de liaison se produit ; et
le second message de demande de récupération après défaillance de liaison indique les informations sur les N premières ressources de signal de référence utilisées pour récupérer les liaisons des M cellules, M≥1, N≥1, et M et N sont des entiers.

9. Dispositif terminal configuré pour mettre en œuvre le procédé selon l'une quelconque des revendications 1 à **4.**

10. Dispositif réseau configuré pour mettre en œuvre le procédé selon l'une quelconque des revendications 5 à 8.

11. Programme informatique comprenant des instructions qui, lorsque le programme est exécuté par un dispositif terminal, amènent le dispositif terminal à réaliser le procédé selon l'une quelconque des revendications 1 à **4.**

12. Programme informatique comprenant des instructions qui, lorsque le programme est exécuté par un dispositif réseau, amènent le dispositif réseau à réaliser le procédé selon l'une quelconque des revendications 5 à 8.
